# EUROPEAN PATENT APPLICATION

(11) **EP 1 863 194 A1**
(43) Date of publication of application: **05.12.2007**
(21) Application number: 05721113.8
(22) Date of filing: 18.03.2005
(51) Int. Cl.: H04B 7/26, H04Q 7/38

(54) **COMMUNICATION SYSTEM IN PASSENGER AND FREIGHT TRANSPORTING MEANS**

(71) Applicant: Fujitsu Ltd., Kawasaki-shi, Kanagawa 211-8588 (JP)
(72) Inventor: NITTA, Daisuke, Fujitsu Limited, Kawasaki-shi, Kanagawa 211-8588 (JP); KUMAGAI, Tomonori, Fujitsu Limited, Kawasaki-shi, Kanagawa 211-8588 (JP); KOBAYASHI, Kazunari, Fujitsu Limited, Kawasaki-shi, Kanagawa 211-8588 (JP)
(74) Representative: Cooper-Rolfe, Elizabeth Louise
(86) International application number: PCT/JP2005/004926
(87) International publication number: WO 2006/100714

(57) **Abstract**

Amobile terminal UE accesses a CN and utilizes the Internet via a base station Node-B. When riding an electric train, the mobile terminal UE receives a disembarkation notification and an embarkation notification from a RFID tag writer equipped on a train, and notifies the base station Node-B that the terminal is on-board the train. While on-board the train, the terminal accesses an in-vehicle AP by employing a WLAN, Bluetooth, or similar system, and the in-vehicle AP communicates with the base station Node-B. This configuration enables the in-vehicle AP to handle all of the mobile devices existing on a train in a centralized manner, thereby eliminating the need for each of the mobile devices to individually access the base station Node-B.

## Description

### Technical Field

The present invention relates to a telecommunication system for telecommunicating via an apparatus that handles radio waves, such as a mobile telecommunications apparatus, that goes into and comes out of a means for transporting a passenger and cargo (hereinafter referred to as a "vehicle"), wherein the vehicle may be a bus, airplane, vessel, electric train, or other transportation means.

### Background Art

In the current location registration system, congestion of a radio environment occurs when a plurality of mobile devices, that are traveling in a vehicle, carry out individual location registrations for a network (e.g., congestion occurs when an electric train or bus moves across location registration areas.)

In order to avoid this congestion, when the location registration straddles one or more location registration areas then a plurality of mobile devices location registrations are grouped and consolidated into a single location registration. This concept is generally called Network Moving (NEMO).

Currently, mobile devices are being created that not only function as telecommunication (sometimes abbreviated as "telecom" hereinafter) terminals (as per the Third Generation Partnership Project (3GPP) protocol for mobile telecom systems), but also has a telecom means such as a wireless LAN (WLAN), Bluetooth, or Ultra WideBand (UWB). Such a mobile device is capable of suppressing power consumption and telecom costs by conveniently using a plurality of telecom systems depending on conditions.

In order to accomplish a NEMO, it is necessary to determine whether a mobile device is inside a vehicle or outside of a vehicle; however, the conventional location registration system is not capable of distinguishing whether a mobile device is inside or outside of a vehicle. Another problem is that power consumption is the same when a mobile device is used outdoors as it is when it is used indoors. This is because conventional in-vehicle telecom means are compliant with the 3GPP.

Therefore, in order to accomplish a NEMO, it is necessary to solve problems such as: finding a resource management method for a wireless network controller (RNC) for telecoms from an in-vehicle access point (AP), security problems when transitioning to another telecom system, a sanity check method between an in-vehicle AP and another telecom apparatus.

Reference patent document 1 has disclosed a system in which a mobile terminal on-board a train accesses an external server and receives a service by way of a server equipped on a train.

Patent document 1: Laid-Open Japanese Patent Application Publication No. 2001-222603

### Disclosure of Invention

The object of the present invention is to provide a telecom system for carrying out a wireless telecom by grouping location registrations of a plurality of wireless telecom means, which are on-board a means for transporting passengers and/or cargo, thereby allowing a wireless telecom apparatus to be used on-board and off-board a transportation means.

According to the present invention, a telecommunication system carries out a wireless telecommunication when transporting a passenger and/or cargo and allows a wireless telecommunication apparatus to embark onto and disembark from a vehicle. The telecommunication, system comprises: an embarkation/disembarkation notification unit for notifying a wireless telecommunication unit, which carries our a wireless telecommunication, as to whether the wireless telecommunication unit is on-board or off-board a transportation means; an infra-transportation means access point unit, which is equipped on a means for transporting a passenger and/or cargo and functions as an access point dedicated to a wireless telecommunication unit within the means for transporting the passenger and/or cargo, wherein the accesses made to a telecommunication system by a wireless telecommunication units are centrally managed; and a wireless telecommunication unit for carrying out a telecommunication by accessing a means acting as a base for the telecommunication system if the wireless telecommunication unit is off-board, and by accessing an intra-transportation means access point unit if the wireless telecommunication unit is on-board.

The present invention is configured such that wireless telecom apparatuses used by passengers on-board a vehicle are not required to individually access a base station; thereby eliminating the possibility of an increased process load on the base station when many mobile devices simultaneously carry out handoffs and/or changeovers. That is, it is configured to have an on-transportation means access point to consolidate telecommunications from individual passenger's wireless telecom apparatuses while on-board a vehicle, and then access an external wireless network; thereby making it possible to suppress increases in hardware resources and power consumption on a wireless network.

### Brief Description of Drawings

Fig. 1 is a diagram that describes one configuration of a telecom system according to a preferred embodiment of the present invention;
Fig. 2 is a functional block diagram of a mobile device according to a preferred embodiment of the present invention;
Fig. 3 is a diagram exemplifying information required when a mobile device transmits an embarkation notification to a Core Network (CN);
Fig. 4 is a diagram showing the contents of an RRC Connection Request message and a new Information Element to be added;
Fig. 5 is a diagram showing the contents of a newly created message to be transmitted when embarking on a vehicle;
Fig. 6 is a block configuration diagram of a CN's function for processing a new message;
Fig. 7 is a diagram showing necessary information transmitted to a mobile device;
Fig. 8 is a diagram showing the contents of a RRC Connection Setup message and newly added information;
Fig. 9 is a diagram exemplifying the contents of a newly created message for establishing an access to an in-vehicle access point (AP);
Fig. 10 is a sequence between a vehicle, mobile device, and CN, when a changeover request occurs;
Fig. 11 is a diagram showing one example of a process for a CN changeover request;
Fig. 12 is a diagram showing information transmitted from a mobile device to a CN;
Fig. 13 is a diagram showing the contents of a message from a GMM Routing Area Update Request and the contents of a newly added message;
Fig. 14 is a diagram showing the contents of a newly created message that is to be transmitted when disembarking from a vehicle;
Fig. 15 is a sequence for changing over a request between a vehicle, mobile device, and CN;
Fig. 16 is a diagram showing an cutline of an operation for a CN changeover request process;
Fig. 17 is a functional block diagram of an in-vehicle AP;
Fig. 18 is a WLAN authentication sequence between a mobile device and an in-vehicle AP;
Fig. 19 is an embarkation notification, sequence between a vehicle, mobile, device, and CN;
Fig. 20 is a disembarkation notification sequence between a vehicle, mobile device, and CN;
Fig. 21 is a WLAN authentication sequence between a mobile device, in-vehicle AP, and RNC, as well as a sequence for establishing a telecommunication between a WLAN and a 3GPP;
Fig. 22 is a packet transmission and reception sequence between a WLAN and 3GPP, within a mobile device, in-vehicle AP, and RNC, when an IP address conversion exists;
Fig. 23 is a sequence for voice transmissions and receptions between a WLAN and 3GPP, within a mobile device, in-vehicle AP, and RNC;
Fig. 24 is a sequence for authenticating a WLAN and establishing a telecommunication between a WLAN and 3GPP, within a mobile device, in-vehicle AP, and RNC;
Fig. 25 is a sequence of packet transmissions and receptions between a WLAN and 3GPP mobile device, within an in-vehicle AP and RNC when an IP address conversion does not exist;
Fig. 26 is a sequence of voice transmissions and receptions between WLAN and 3GPP mobile device, within an in-vehicle AP and RNC;
Figs. 27A and 27B are diagrams showing a RFID (radio frequency identification) data format and a mobile network ID data format, respectively;
Figs. 28A through 28D are diagrams exemplifying an installation method for a RFID tag reader/writer (part 1);
Figs. 29A through 29D are diagrams exemplifying an installation method for a RFID tag reader/writer (part 2);
Figs. 30A through 30D are diagrams exemplifying an installation method for a RFID tag reader/writer (part 3); and
Figs. 31A through 31D are diagrams exemplifying an installation method for a RFID tag reader/writer (part 4).

### Best Mode for Carrying Out the Invention

The present specification generically refers to a bus, a fuselage of an airplane, a body of a vessel, a vehicle in the form of an electric train (named "train" hereinafter), a vehicle in the form of an automobile, or a vehicle in an alternative form, as a vehicle. The following description assumes that a wireless network, such as a WLAN, is within a vehicle; however, the present invention is applicable to Bluetooth or other systems. The present specification is described by exemplifying the 3GPP as a mobile telecom system; however, the present invention is applicable to other mobile telecom systems that are compliant with other standards (i.e., specifications) and is not limited to those mobile telecom systems that are compliant with 3GPP.

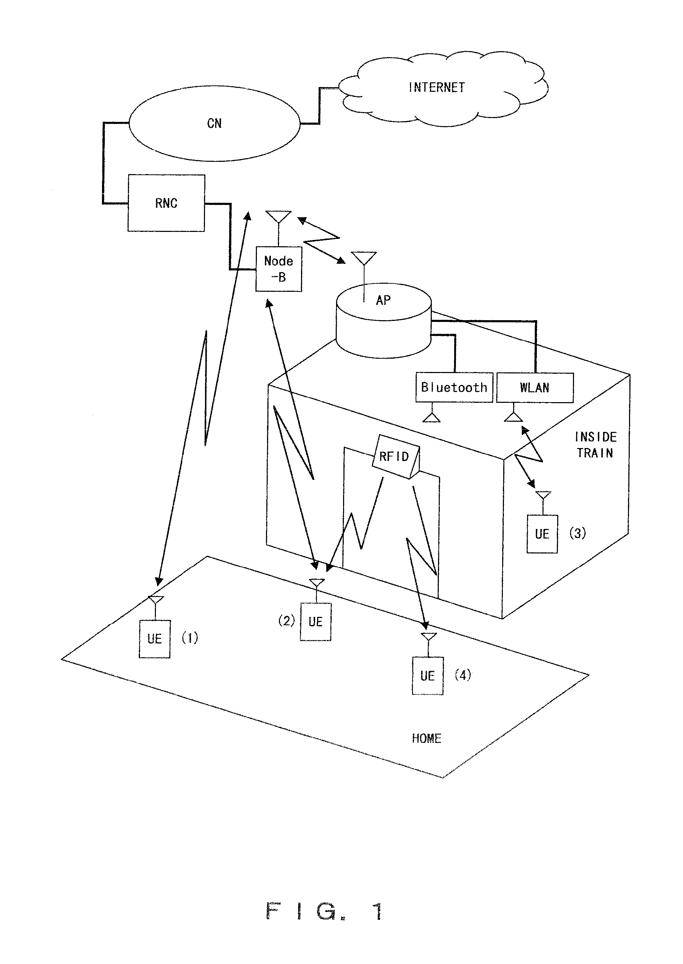

Fig. 1 is a diagram describing a configuration for a telecom system according to a preferred embodiment of the present invention.

The system, according to a preferred embodiment of the present invention, comprises: mobile devices (shown in the drawings as user equipment (UE) ; an area in which a plurality of mobile devices can simultaneously move (e.g., a vehicle such as a train); a wireless IC tag (i.e., a radio frequency identification (RFID) tag); a wireless IC (integrated circuit) tag reader/writer (i.e., an RFID tag reader/writer); a 3GPP access point (AP) ; an access point of a wireless telecom system other than the 3GPP (e.g. , WLAN and Bluetooth) ; a 3GPP base station (Node-B) ; a 3GPP wireless network control apparatus (RNC: Radio Network Controller) ; a 3GPP core network (CN) ; and a 3GPP home location register (HLR) equipped on the core network. The core network (CN) is connected to the Internet, thereby allowing mobile devices to access a server, which provides a service via an access point equipped on a vehicle.

The mobile device comprises a 3GPP telecom function and a wireless telecom system other than a 3GFP system (e.g., WLAN, Bluetcoth, or similar system). Additionally, the mobile device comprises an RFID tag signal reception function.

The vehicle is equipped with a 3GFP access point, an access point for a wireless telecom system other than a 3GPP (e.g., WLAN, Bluetooth, or similar system), and an RFID tag writer.

Mobile devices use a 3GPP network comprising a Node-B, RNC, CN, or similar means for connecting to the Internet.

The following shows an outline of a system's operation flow according to a preferred embodiment of the present invention.

When embarking on a vehicle the mobile device engaged in a 3GPP telecom obtains an embarkation notification (including a mobile network ID) from a vehicle by way of the RFID tag, and transmits it to a CN. The CN searches the applicable vehicle, based on the mobile network ID, notifies the mobile device, and instructs the mobile device to change over to the WLAN. Having received the notification from the CN, the mobile device changes from a telecom system over to a WLAN, and carries out a telecom. In the vehicle, telecoms are carried out only in the WLAN instead of the 3GPP. Additionally, telecoms in a WLAN that are carried out by a plurality of mobile devices are consolidated into a 3GPP access point. When disembarking from the vehicle and arriving at a destination station, a mobile device obtains a disembarkation notification from the vehicle by way of a RFID tag, cuts off the WLAN, and changes over to the usual 3GPP telecom.

The following is equipped in the system operation flow described above : a function for discerning an event when a mobile device embarks on a vehicle; a function on a mobile device for transmitting an embarkation notification to a CN; the method for a CN to judge a request for changing to a WLAN based on an embarkation notification; a method for transmitting a RNC and changeover request, an ID, and a password to a mobile device; a method for changing over a mobile device to the WLAN; a function for discerning whether a mobile device has disembarked from a vehicle; a function for transmitting a disembarkation notification from a mobile device to a CN; a method for transmitting information from a CN to a HLR based on the disembarkation notification; a function to establish telecoms for a plurality of mobile devices by using a RNC resource as part of the 3GPP access point; a protocol conversion function for establishing a telecom between a 3GPP access point within a vehicle and a WLAN access point; and a function for carrying out individual receptions for mobile devices under the control of the 3GPP access point.

### <Function for discerning an event when a mobile device embarks on a vehicle>

The following describes a function for discerning an event when a mobile device embarks on a vehicle by using an RFID tag. The following shows the necessary method and an outline of the function:
1. Install two RFID tag writers internally or externally to a vehicle, and respectively transmit an embarkation notification and a disembarkation notification; and
2. Equip mobile devices with a receiving function using an RFID tag; judge embarkation to, and disembarkation from, a vehicle; create data to transmit to a CN; and transmit data by using a 3GPP.

The following illustrates details of the functions:
I. An RFID tag reader/writer installation method for implementing a function to discern whether there has been an embarkation to, or disembarkation from, a vehicle by using an RFID tag, wherein the method further comprises:
   1. A method #1 for equipping RFID tag writers in two places (one external and one internal to a vehicle).
      The outside-vehicle RFID tag writer and the inside-vehicle RFID tag writer operate simultaneously so that the outside-vehicle RFID tag writer can continuously transmit a disembarkation notification and the inside-vehicle RFID tag writer can continuously transmit an embarkation notification (including a mobile network ID).
   2. A method #2 for equipping RFID tag writer in two places (one external and one internal to a vehicle).
      The outside-vehicle RFID tag writer continuously transmits a disembarkation notification to a mobile device when a door is opened and the inside-vehicle RFID tag writer transmits an embarkation notification (including a mobile network ID) to a mobile device for a certain length of time when the door is closed.
   3. A method #1 for equipping RFID tag writers internally to, and externally to (e.g., on a station platform), a vehicle.
      The on-platform RFID tag writer and inside-vehicle RFID tag writer operate simultaneously so that the on-platform RFID tag writer continuously transmits a disembarkation notification, and the inside-vehicle RFID tag writer continuously transmits an embarkation notification (including a mobile network ID) .
   4. The method #2 of equipping RFID tag writers internally to, and externally to (e.g. , on a station platform), a vehicle
      The on-platform RFID tag writer continuously transmits a disembarkation notification to a mobile device when a door is opened, and the inside-vehicle RFID tag writer transmits an embarkation notification (including a mobile network ID) to a mobile device for a certain length of time when a door is closed.
II. The following is a mobile device function for discerning when a mobile device embarks on a vehicle by using an RFID tag.

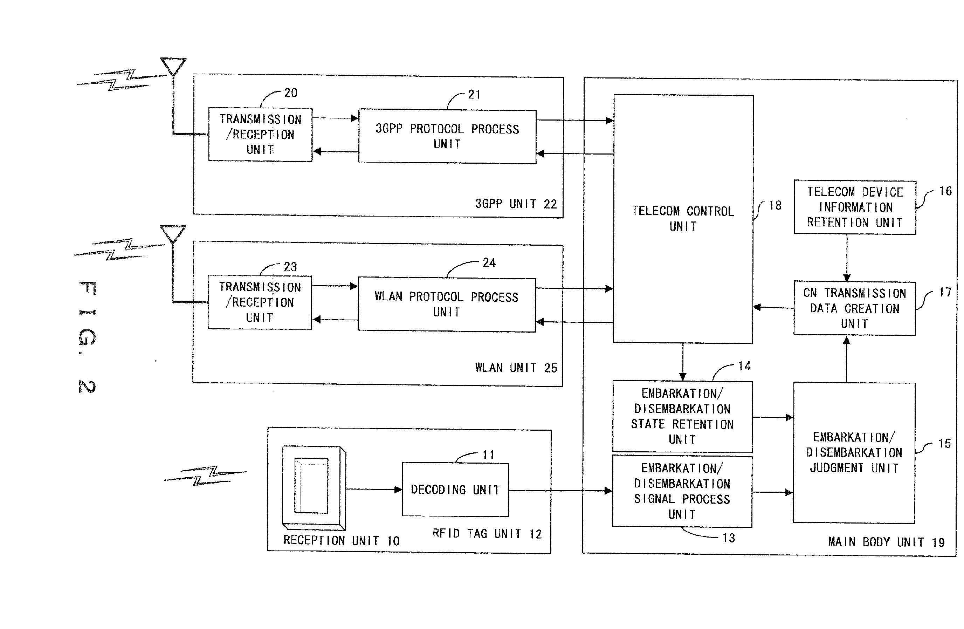

   Fig. 2 is a functional block diagram of a mobile device according to a preferred embodiment of the present invention.

A reception unit 10 is a functional block for receiving a signal from an RFID tag writer that is equipped on a vehicle. A decoding unit 11 is a functional block for decoding a received signal. The reception unit 10 and decoding unit 11 constitute an RFID tag unit 12. An embarkation/disembarkation signal process unit 13 is a functional block for extracting whether a decoded signal is an embarkation notification or a disembarkation notification. An embarkation/disembarkation state retention unit 14 is a functional block for storing whether a mobile device is currently on-board a vehicle (including a mobile network ID) or off-board a vehicle. An embarkation/disembarkation judgment unit 15 is a functional block for judging whether a mobile device is on-board or off-board a vehicle based on a received embarkation (or disembarkation) notification and the current state.

The judgment criterion is in accordance with the state changeover judgment table 1 described as follows:

**[Table 1]**

| Telecom State of mobile device | Disembarkation notification is received | Embarkation notification is received |
|---|---|---|
| Off-board (3GPP) | Discard the disembarkation notification | Transmit the embarkation notification to the CN transmission data creation unit |
| On-board (WLAN) | Transmit the disembarkation notification to the CN transmission data creation unit | Discard the embarkation notification |

A telecom device information retention unit 16 is a functional block for recording a mobile device's individual identifier and information on the telecom device supported by the mobile device. It is also possible to make the HLR perform a function similar to the function of recording information on a telecom device supported by a mobile device. If an HLR comprises this function, then the function of recording information on a telecom device is no longer necessary. A CN transmission data creation unit 17 is a functional block for adding telecom device information obtained from a telecom device information retention unit 16 to an embarkation notification and a mobile network ID. This information is transmitted from the embarkation/disembarkation judgment unit 15 and transmits the resultant to a telecom control unit 18. The telecom control unit 18 is a functional block capable of transmitting and receiving designated information by using the 3GPP protocol. The embarkation/disembarkation signal process unit 13, embarkation/disembarkation state retention unit 14, embarkation/disembarkation judgment unit 15, telecom device information retention unit 16, CN transmission data creation unit 17, and telecom control unit 18, constitute a main body unit 19.

A transmission/reception unit 20 is a functional block for transmitting and receiving a signal from a 3GPP protocol. A 3GPP protocol process unit 21 is a functional block for extracting data from a reception signal by processing the 3GPP protocol and processing the data for a transmission signal. The transmission/reception unit 20, and 3GPP protocol process unit 21, constitutes a 3GPP unit 22. A transmission/reception unit 23 is a functional block for transmitting and receiving a signal of the WLAN protocol. A WLAN protocol process unit 24 is a functional block for extracting data from a reception signal by processing a WLAN protocol, and processing data for a transmission signal. The transmission/reception unit 23, and WLAN protocol process unit 24, constitute a WLAN unit 25.

### <Function of a mobile device transmitting an embarkation notification to a CN>

The following describes the function of a mobile device transmitting an embarkation notification to a CN.

The following is an outline of the function:
1. A mobile device converts data, created by the CN transmission data creation unit, into a message in the 3GPP protocol and transmits the resultant to the RNC.
2. The RNC receives the message transmitted from the mobile device, understands the contents, and transmits a request to the HLR on the CN side.

The following are details of the function:

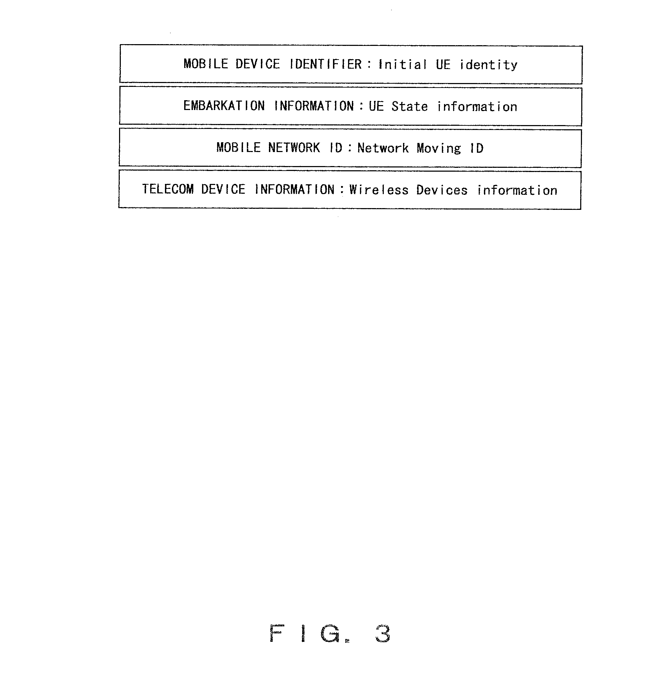

I. Fig. 3 illustrates a data format for an embarkation notification that was created by the CN transmission data creation unit (which is located within the main body unit of a mobile device). Fig. 3 is a diagram exemplifying information required when a mobile device transmits an embarkation notification to a CN.
   1. An identifier (i.e., Initial UE identity) for identifying an individual mobile device.
   2. Information (i.e., UE state information) for identifying the embarkation and disembarkation of a mobile device into or out of a vehicle.
   3. A mobile network ID (i.e., Network Moving ID) obtained from the vehicle.
   4.information (i.e., Wireless Devices information) about a wireless telecom system other than 3GPP incorporated in the mobile device.
II. There are two conceivable methods for converting data created by a CN transmission data creation unit, which is located within the main body unit of a mobile device, into a message in the 3GPP protocol and transmitting the resultant to an RNC. These two methods are as follows:
   1. A method for adding a new Information Element to an RRC Connection Request, wherein the Information Element is a message that is used when the mobile device transmits the resultant to the RNC.
      An Initial UE identity is stored in a UE Information Element of an existing RRC Connection Request message, and a NEMO information Element is newly added as an Information Element.

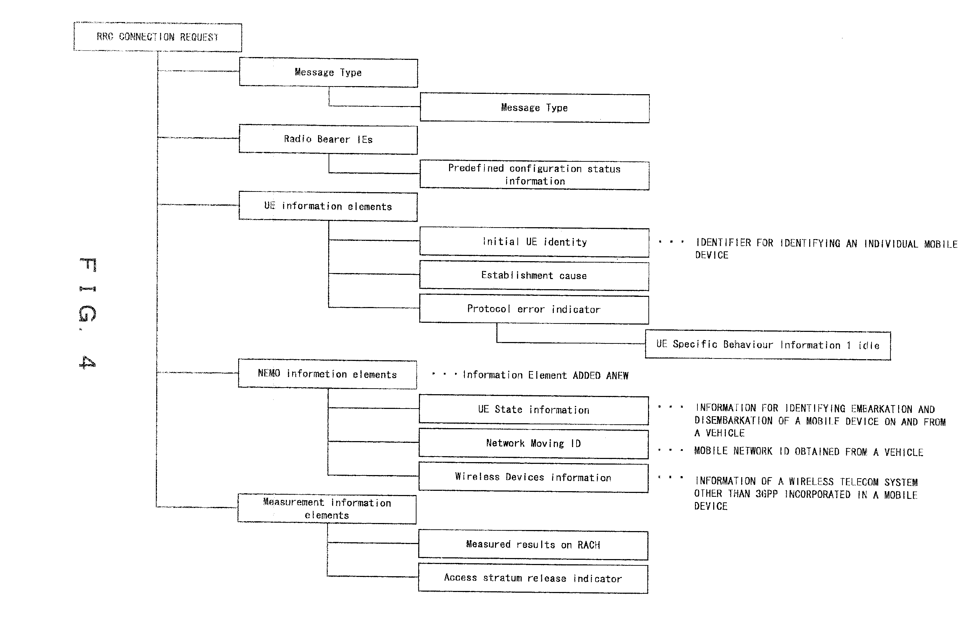

      Fig. 4 is a diagram showing the contents of an RRC Connection Request message and a new Information Element to be added.
      The Initial UE identity, stored in a UE Information Element, is used as an identifier for identifying an individual mobile device. The NEMO information elements, which are newly added Information Element (s), are furnished with UE state information. UE state information, is information for identifying the embarkation and disembarkation of a mobile device to a vehicle. UE state information includes a Network Moving ID, which is a mobile network ID obtained from a vehicle, and information on a wireless telecom system (Wireless Devices information), other than a 3GPP, which is incorporated on the mobile device.
   2. A method for defining a new 3GPP message and transmitting it to an RNC.

   A new message (i.e., a Network Moving Request) is created and includes: an identifier element (i.e., Initial UE identity) for identifying an individual mobile device; an element (i.e., UE state information) for identifying the embarkation and disembarkation of a mobile device on, and from, a vehicle; an element (i.e., Network Moving ID) of a mobile network obtained from a vehicle; and an element (i.e.. Wireless Devices information) of a wireless telecom system other than the 3GPP incorporated on a mobile device.

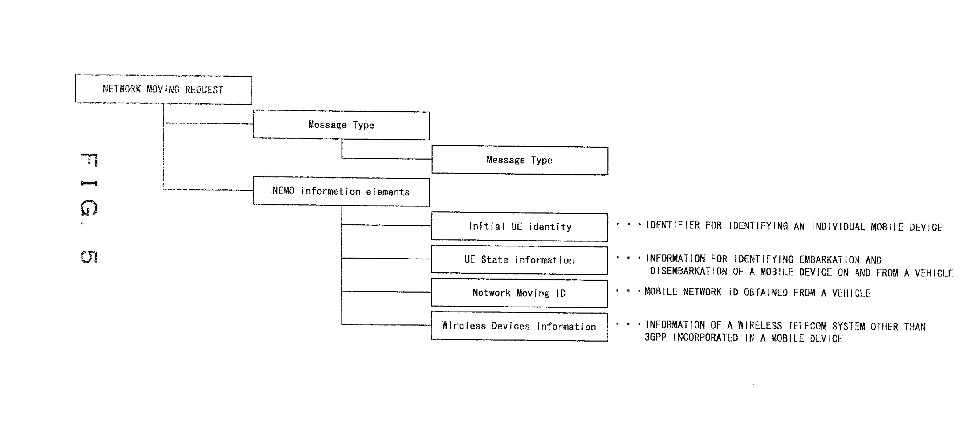

   Fig. 5 is a diagram showing contents of a newly created message.
   A Network Moving Request is created as a new message. The message is furnished with NEMO information elements consisting of an Initial UE identity, UE state information, a Network Moving ID, and Wireless Device information.
III. The following describes the operation flow of a function, wherein the RNC receives a message transmitted from a mobile device, understands the contents of the message and transmits the message to the HLR on the CN side.
   1. The RNC receives a message (i.e., a RRC Connection Request to which an Element in the above paragraph II is added, or a new message is defined) from a mobile device by way of a Node-B.
   2. The RNC refers to the contents of the message in the above paragraph 1, and validates that there is content in the information that indicates an "embarkation" (i.e., UE state information), which identifies a mobile device's embarkation onto and disembarkation from a vehicle.
   3. The RNC transmits an identifier (i.e., Initial UE identity), which is used to identify an individual mobile device, and also transmits the mobile network ID (i.e., Network Moving ID) that is obtained from the vehicle, and transmits information (i.e., Wireless Devices information) about a wireless telecom system (other than a 3GPP), which is incorporated on the mobile device, to the HLR on the CN side.

### <Method wherein a CN judges a request for changing to a WLAN based on an embarkation notification>

The following describes a method for carrying out an inquiry request to a HLR based on an identifier (i.e., Initial UE identity) that identifies an individual mobile device, a Mobile network ID (i.e., Network Moving ID) obtained from the vehicle, information (i.e., Wireless Devices information) about a wireless telecom system (other than a 3GPP) that is incorporated on a mobile device, and judging whether or not to change over to a WLAN.

An outline of the function is as follows:
1. The CN transmits an identifier (i.e., Initial UE identity) for identifying an individual mobile device, a mobile network ID (i.e., Network Moving ID), and information (i.e., Wireless Devices information) about a wireless telecom system (other than a 3GPP) , which is incorporated in the mobile device and transmitted from the RNC to the HLR.
2. The HLR compares two pieces of pre-registered information (i. e. , a vehicle's mobile network ID and information about a vehicle's wireless telecom system) with two pieces of information from a mobile device (i.e., the mobile network ID and the wireless telecom system), which are transmitted from the CN. From this information, the HLR identifies the vehicle and judges whether or not there is a common wireless telecom system between the vehicle and the mobile device.
3. After judging that there is a common wireless telecom system between the vehicle and the mobile device, the HLR transmits a request to the CN to change a mobile device's connections to a common wireless telecom system, and uses the vehicle' s AP to authenticate the pre-registered ID and password. The HLR also defines the assigned authentication-use ID, and authentication password, as "in use" and adds an identifier (i.e., Initial UE identity) to identify an individual mobile device. An alternative configurationmay conceivably have the HLR request the vehicle' s AP, obtain an authenticable ID and password, and then transmit the authenticable ID and password to the CN.
4. The CN transmits the request to change the mobile device connection to a common wireless telecom system, and transmits a pre-registered ID and password from a HLR to a RNC, wherein the vehicle's AP can authenticate the pre-registered ID and password.

The following shows details of the function described above in outline 2:
I. The HLR compares two pieces of pre-registered information (i.e., a vehicle's mobile network ID and information about a vehicle' s wireless telecom system) with two pieces of information that are transmitted from the CN (i.e., a mobile device's mobile network ID and wireless telecom system) using the following method:
   1. The HLR searches a file, from a database that stores information about vehicle wireless telecom systems, for a vehicle that has a mobile network ID that is identical to the mobile network ID that was transmitted from the CN based on the vehicle's mobile network ID.
   2. The HLR compares information about a vehicle' s wireless telecom system from a search file with information about the mobile device's wireless telecom system, and searches for the same wireless telecom system. If a plurality of wireless telecom systems are found, then a high priority wireless system is adopted on a pre-designated vehicle or mobile device. Another method for adopting a wireless system when a plurality of wireless telecom systems are found may conceivably include an HLR making an inquiry to a vehicle's AP as to the number of mobile devices that are connected to a plurality of applicable wireless telecom systems (or the amount of traffic on the systems), and adopting a wireless system with the fewest number of mobile devices connected to it (or the least amount of traffic).

The following shows details of the function described above in outline 3:
I. The following shows a function wherein an HLR searches an ID and a password, and an AP authenticates the applicable pre-registered vehicle.
   1. The HLR obtains a list of IDs and passwords by searching a database that stores vehicle mobile network IDs, and wireless telecom systems IDs and passwords (comprising a list distinguishing whether the IDs and passwords are "in use" or "not in use"). The wireless telecom systems IDs and passwords are possessed by a vehicle' s APs by using an applicable vehicle' s mobile network ID and the adopted wireless telecom system as search keys.
   2. The HLR selects, and adopts, an unused ID and password from a list of IDs and passwords of an applicable vehicle's AP. The HLR also defines assigned authentication-use IDs and authentication passwords as "in use", and adds an identifier (i.e., Initial UE identity) to identify an individual mobile device in order to use it for a later search.
   3. The HLR transmits the ID and password mentioned in paragraph 2 and sends connection change request to an applicable wireless telecom system to the CN.

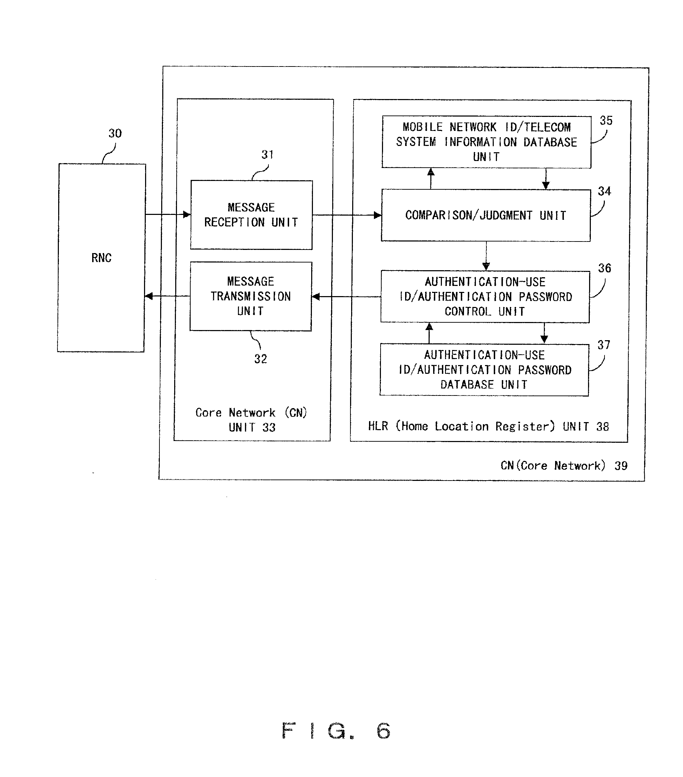

Fig. 6 is a block configuration diagram of a CN' s function for processing a new message.

A CN unit 33 of a CN 39 allows a message reception unit 31 to receive a message from an RNC 30 and allows a message transmission unit 32 transmit a message to the RNC 30. The message received in the message reception unit 31 is compared, and judged, by a HLR unit's 38 comparison/judgment unit 34. In this event, information from a mobile network ID/telecom system information database unit 35 is referred to. The comparison/judgment unit 34 and the mobile network ID/telecom system information database unit 35 are configured to carry out the process described in the above outline (paragraph) 2. An authentication-use ID/authenticaticn password control unit 36 and an authentication-use ID/authentication password database unit 37 are configured to carry out the process described in the above outline (paragraph) 3.

### <Method for an RNC to transmit a changeover request, ID, and password, to a mobile device>

The following describes a method for an RNC to transmit a changeover request, ID, and password, to a mobile device.

An outline of the function is as follows:
An RNC transmits a request to change a connection to an applicable wireless telecom system, which is transmitted from the CN. The RNC also transmits the applicable wireless telecom' s ID and password to a mobile device by converting them into a message in accordance with a 3GPP protocol.

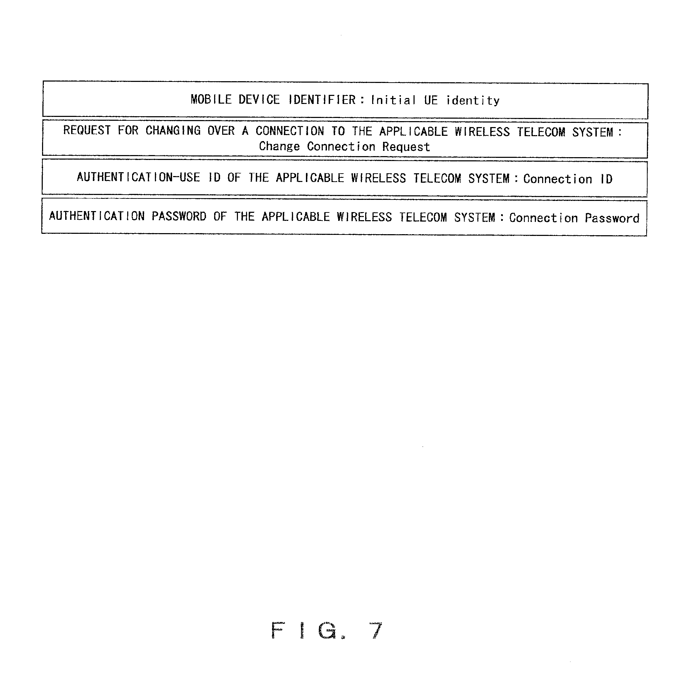

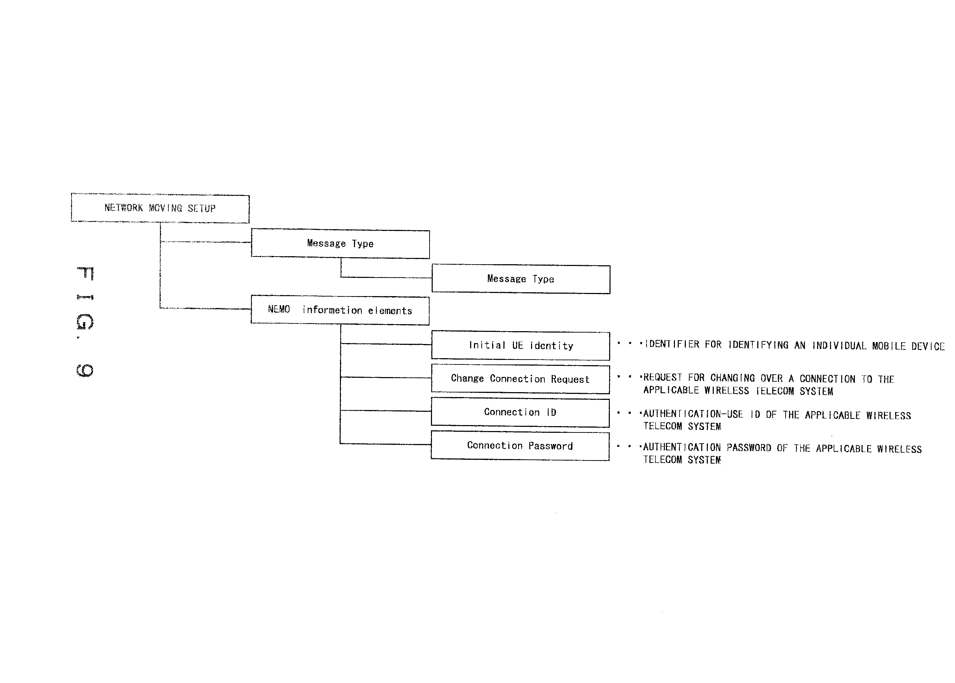

The detail of the function is as follows:
I. A request by the RNC to change the connection to an applicable wireless telecom system is transmitted from the CN, and the applicable wireless telecom system's ID and password data formats are shown in Fig. 7.
   Fig. 7 is a diagram showing necessary information transmitted to a mobile device.
   Fig. 7 shows the following pieces of information:
   1. Identifier (i.e., Initial UE identity) for identifying an individual mobile device;
   2. Request (i.e., Change Connection Request) for changing a connection to the applicable wireless telecom system;
   3. Authentication-use ID (i.e., Connection ID) of the applicable wireless telecom system; and
   4. Authentication password (i.e., Connection Password) of the applicable wireless telecom system.
II. The following is a conceivable method for an RNC to transmit a request, to a mobile device, to change a connection to an applicable wireless telecom system. This method includes transmitting the applicable wireless telecoms system's ID and password from the CN by converting the ID and password into a message that complies with the 3GPP protocol.
   1. A method for adding a new Information Element to an RRC Connection Setup, which is a message used to respond to an RRC Connection Request, and for transmitting the result to a mobile device when the mobile device issues a call.
      Add the Initial UE identity, stored in the UE Information Elements of the existing RRC Connection Setup message, and the NEMO Information Elements as a new Information Element.

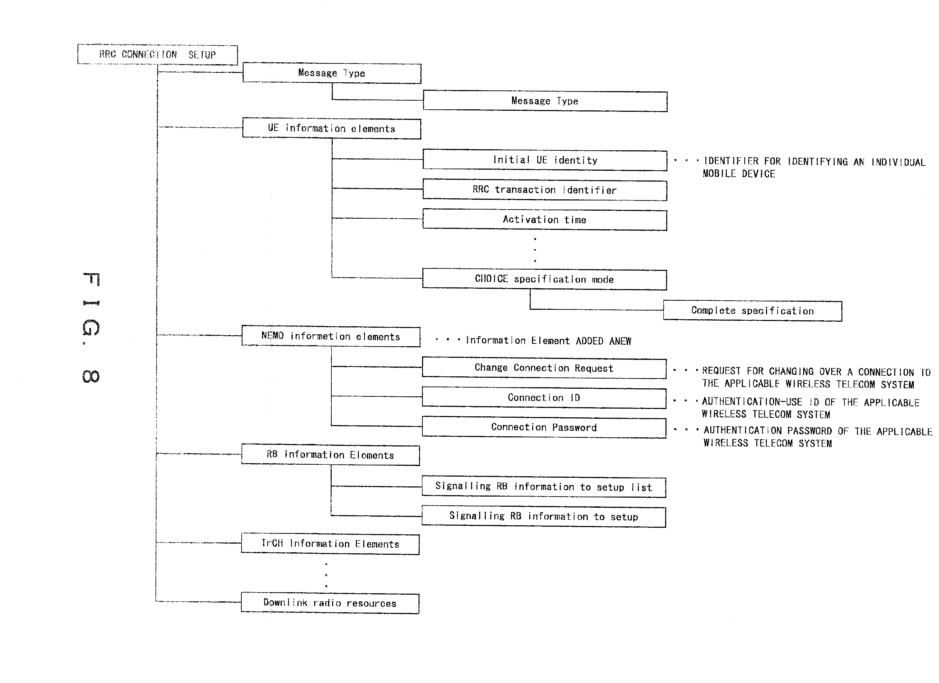

      Fig. 8 is a diagram showing the contents of a RRC Connection Setup message and newly added information.
      An Initial UE identity, belonging to the UE information elements of the RRC Connection Setup, is used as an identifier to identify an individual mobile device. The NEMO information elements which are newly added Information Elements are furnished with a Change Connection Request that is a request to change a connection to an applicable wireless telecom system; a Connection ID (which is an authentication-use ID of the applicable wireless telecom system) ; and a Connection password (which is an authentication password for the applicable wireless telecom system.)
   2. A method for defining a new 3GPP message and transmitting it to a mobile device
      Fig. 9 is a diagram exemplifying the contents of the newly created message.
      What is created is a message (i.e., Network Moving Setup) including an identifier element (i.e., Initial UE identity) for identifying an individual mobile device, an element (i.e., Change Connection Request) for requesting a connection be changed to an applicable wireless telecom system, an element (i.e., Connection ID) of an applicable wireless telecom system's authentication-use ID, and an element (i.e., Connection Password) of an applicable wireless telecom system's authentication password.

### <Method for a mobile device to change to a WLAN>

The following details, a method for a mobile device to change over to a WLAN.
1. A mobile device allows a 3GPP unit to receive an RRC Connection Setup added with a new Element, or receive a newly created message (i.e., Network Moving Setup).
2. Based on the received message, the mobile device's telecom control unit discerns whether a request to change to a WLAN has been made, obtains a WLAN authentication-use ID and an authentication password, and ends the telecom in the 3GPP.
3. The mobile device initiates a WLAN unit and connects to an in-vehicle AP by using the authentication-use ID and authentication password.
4. Upon completion of the authentication, the mobile device continues telecom with the in-vehicle AP in the WLAN.

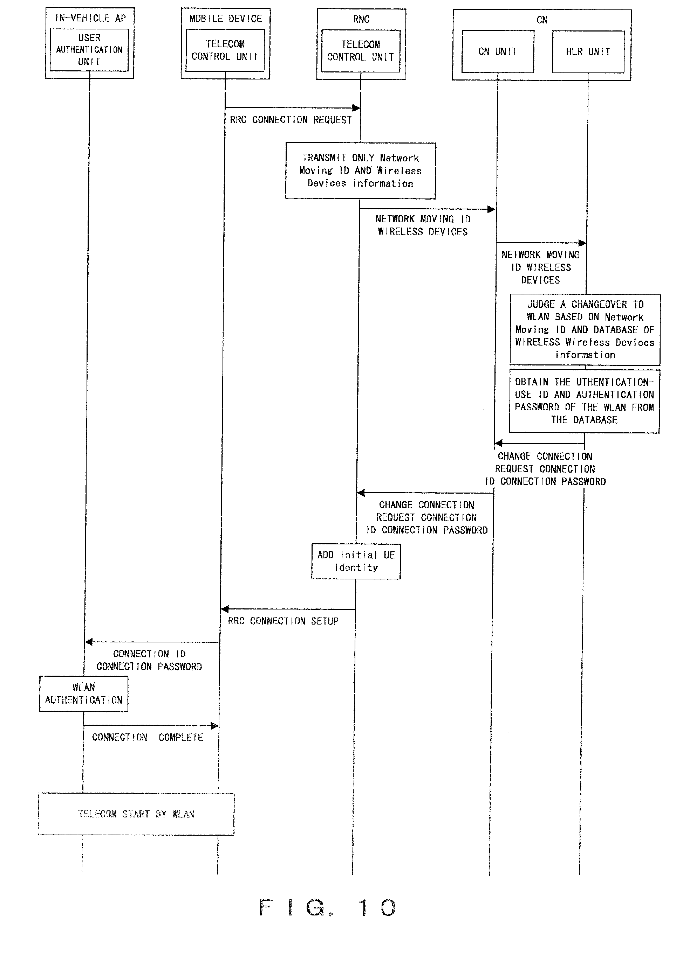

Fig. 10 is a sequence between a vehicle, a mobile device, and a CN.

The mobile device's telecom control unit transmits an RRC Connection Request to a RNC' s telecom control unit, wherein a new Element is added to the RRC Connection Request. The RNC transmits only the Network Moving ID and Wireless Devices information to the CN. The CN allows the CN unit to receive the Network Moving ID and Wireless Devices information, and transmit them to the HLR unit. The HLR unit judges whether to change to a WLAN based on database of the Network Moving ID and the Wireless Devices information, obtains an authentication-use ID and an authentication password for the WLAN from the database, and transmits a Change Connection Request, Connection ID, and Connection Password to the RNC via the CN unit. The RNC adds an Initial UE identity to the aforementioned pieces of information and transmits an RRC Connection Setup message to a mobile device. The mobile device accesses the in-vehicle AP and receives a WLAN authentication by using the Connection ID and Connection Password, thereby enabling a WLAN telecom between the in-vehicle AP and mobile device.

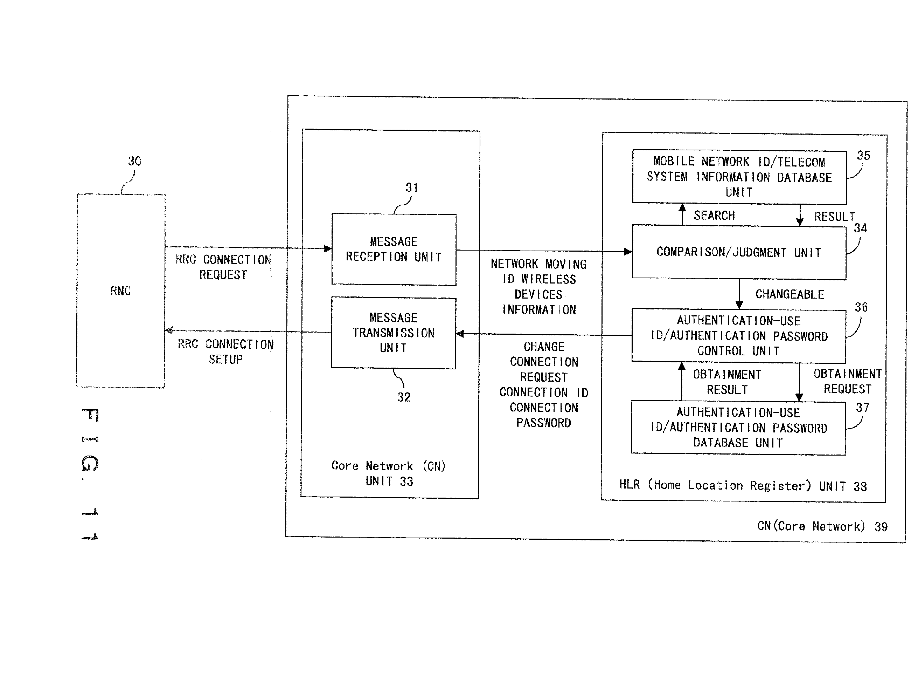

Fig. 11 is a diagram showing one example of a process for a CN changeover request.

When the RNC 30 transmits an RRC Connection Request, the message reception unit 31 in the CN unit 33 receives it, and transmits only the Network Moving ID and Wireless Devices information to the comparison/judgment unit 34. The comparison/judgment unit 34 searches in the mobile network ID/telecom system information database unit 35, and judges whether to change to a WLAN based on the search result. The result of the judgment is transmitted to the authentication-use ID/authentication password control unit 36, and a request is made to the authentication-use ID/authentication password database unit 37 for obtaining an authentication-use ID and an authentication password. The authentication-use ID/authentication password control unit 36 transmits a Change Connection Request, a Connection ID, and a Connection Password to the message transmission unit 32 based on the obtainment result. The message transmission unit 32 transmits these pieces of information to the RNC 30 as an RRC Connection Setup.

### <Function for discerning whether a mobile device is disembarking from a vehicle>

The following describes the function for discerning whether a mobile device is disembarking from a vehicle by employing an RFID tag.

An outline of the function is as follows:
1. Two RFID tag writers are equipped to a vehicle (either internally or externally), and an embarkation notification and a disembarkation notification are respectively transmitted.
2. A mobile device is equipped with a receiving function using an RFID tag. The mobile device is also equipped with Functions to judge the embarkation onto, or disembarkation from, a vehicle, to create data to be transmitted to a CN, and to transmit by employing a 3GPP.

A detail of the function, is as follows:
I. An RFID tag writer/reader installation method for implementing a function to discern whether there is an embarkation onto, or disembarkation from, a vehicle, is similar to the method described in the "function for discerning whether a mobile device is embarking on a vehicle", wherein four manners being conceivable.
II . The function used by a mobile device to discern whether a mobile device is embarking on a vehicle is the same as the method described in the "function, for discerning whether amobile device is embarking on a vehicle".

### <Function for a mobile device to transmit a disembarkation notification to a CN>

The following describes the function of a mobile device when transmitting a disembarkation notification to the CN.

An outline of the function is as follows:
1. The mobile device converts data, created by the CN transmission data creation unit, into a message in accordance with a 3GPP protocol and transmits the message to the RNC.
2. The RNC receives the message transmitted from a mobile device, understands the contents, and transmits the message to a HLR on the CN side.

A detail of the function is as follows:

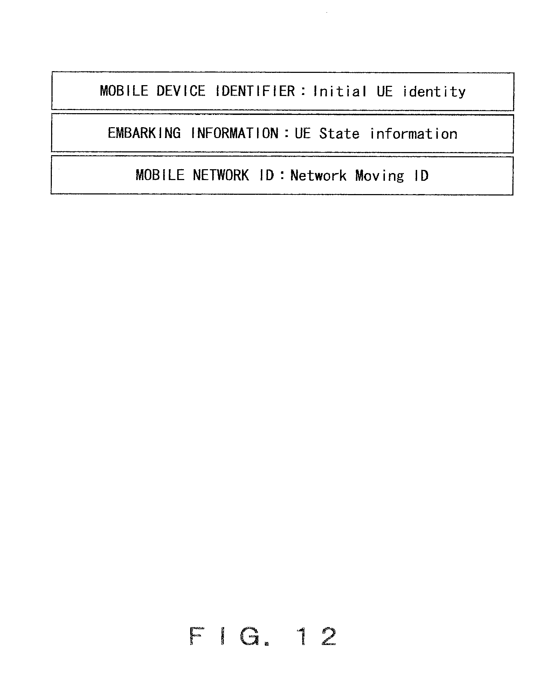

I. Fig. 12 shows the data format for a disembarkation notification, which is created by the CN transmission data creation unit within the main body unit of a mobile device.
   Fig. 12 is a diagram showing information transmitted from a mobile device to a CN.
   Fig. 12 shows the following pieces of information:
   1. Identifier (i.e., Initial UE identity) for identifying an individual mobile device;
   2. Information (i.e., UE state Information) for identifying the embarkation and disembarkation of the mobile device to the vehicle;
   3. Mobile network ID (i.e., Network Moving ID) obtained from the vehicle;
II. There are two conceivable methods for converting data created by the CN transmission data creation unit, which is located within the main body unit of the mobile device, into a message in the 3GPP protocol and transmitting the resultant to the RNC.
   1. A new Information Element is added to a GMM Routing Area Update, which is a message used when attaching a mobile device, and is transmitted to the RNC.
      NEMO Information Elements are added, as a new Information Element, to the existing GMM Routing Area Update Request message.

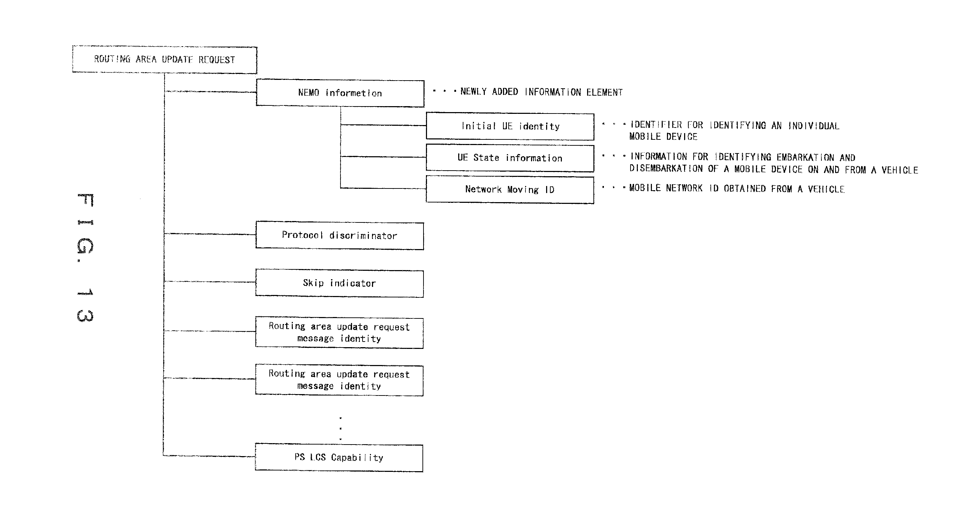

      Fig. 13 is a diagram that shows the contents of a newly added message.
      The NEMO Information Elements are added to the GMM Routing Area Update Request. The NEMO Information Elements include Initial UE identity, UE state Information, and Network Moving ID.
   2. A new 3GPP message is transmitted to the RNC.

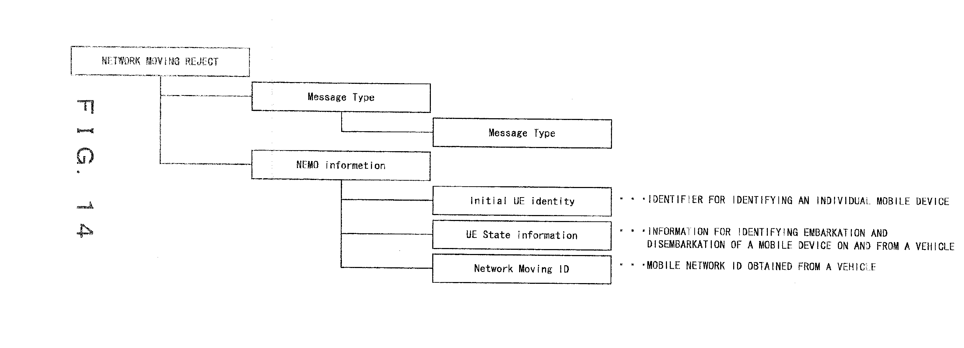

      Fig. 14 is a diagram showing the contents of a newly created message.
      A new message (i.e., Network Moving Reject) is created and includes an identifier element (Initial UE identity) for identifying an individual mobile device, an information element (UE state Information) for identifying whether a mobile device is embarking on or disembarking from a vehicle, and an element (Network Moving ID) of a mobile network ID obtained froma vehicle.
III. The following describes the flow of a RNC function that receives a message transmitted from a mobile device, understands the contents, and transmits the message to the HLR on the CN side.
   1. The RNC receives a message (i.e., GMM Routing Area Update Request to which a new element is added, as described in the above paragraph II, or a new message is defined) by way of the Node-B.
   2. The RNC refers to the contents of the message from the above paragraph 1, and confirms the existence of the contents by indicating "disembarkation" as the information, element (UE state Information) which identifies whether the mobile device is embarking onto or disembarking from a vehicle.
   3. The RNC transmits an identifier (i.e., Initial UE identity), which is used to identify an individual mobile device (included in the message in paragraph 1 above) and transmits the mobile network ID (i.e., Network Moving ID) obtained from the vehicle to the HLR on the CN side.

### <Method for a CN to transmit to an HLR based on a disembarkation notification>

The following describes a method for the CN to transmit an identifier (i.e., Initial UE identity) to the HLR, wherein the method identifies an individual mobile device and a mobile network ID (i.e., Network Moving ID).

An outline of the function is as follows:
1. The CN transmits an identifier (i.e., Initial UE identity), to identify an individual mobile device and a mobile network ID (i.e., Network Moving ID), to the HLR.
2. The HLR searches the authentication-use ID and authentication password used by a mobile device based on two pieces of the information (i.e., the identifier (i.e., Initial UE identity) for identifying an individual mobile device and a mobile network ID (i.e., Network Moving ID).) These two pieces of information are transmitted from the CN, and these two pieces of information are also registered when embarking onto a vehicle.
3. The HLR changes the "in use" authentication-use ID and authentication password to "not in use", and transmits a disembarkation completion notification to the CN.
4. The CN transmits to the RNC the disembarkation completion notification sent from the HTR.
5. The RNC receives the disembarkation completion notification, and the series of processes ends.

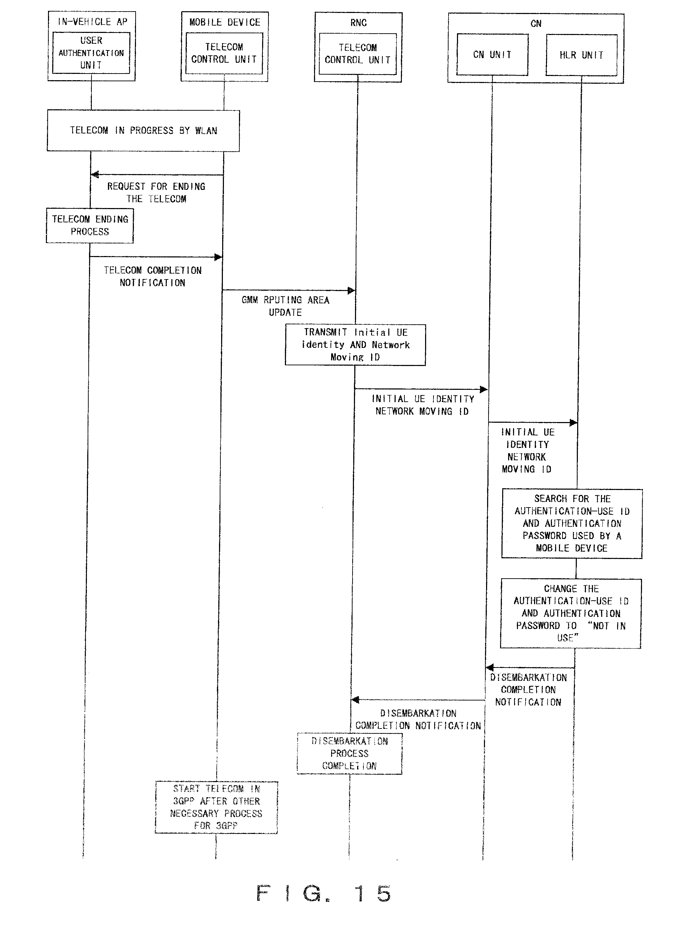

Fig. 15 is a sequence of changeover requests between the vehicle, mobile device, and CN.

Upon completion of a WLAN's telecom with an in-vehicle AP, a mobile device transmits a GMM Routing Area Update Request to the RNC. The RNC receives a message (i.e., GMM Routing Area Update Request to which a new element is added as described in paragraph II above, or a new message is defined) transmitted from the mobile device. The RNC refers to the contents of the transmitted message and confirms the existence of the content by indicating whether "disembarkation" is included as an information(i.e., UE state Information) for identifying whether a mobile device has embarked onto or disembarked from a vehicle.

The RNC transmits an identifier (i.e.. Initial UE identity) to identify an individual mobile device and a mobile network ID (i.e., Network Moving ID) obtained from the vehicle, which are included in the transmitted message to the HLR on the CN side. The HLR unit searches the authentication-use ID and authentication password used by the mobile device, and then changes the authentication-use ID and authentication password to "not in use". The HLR unit transmits a disembarkation completion notification to the RNC by way of a CN unit. The mobile device starts a telecom in the 3GPP after carrying out other necessary 3GPP processes.

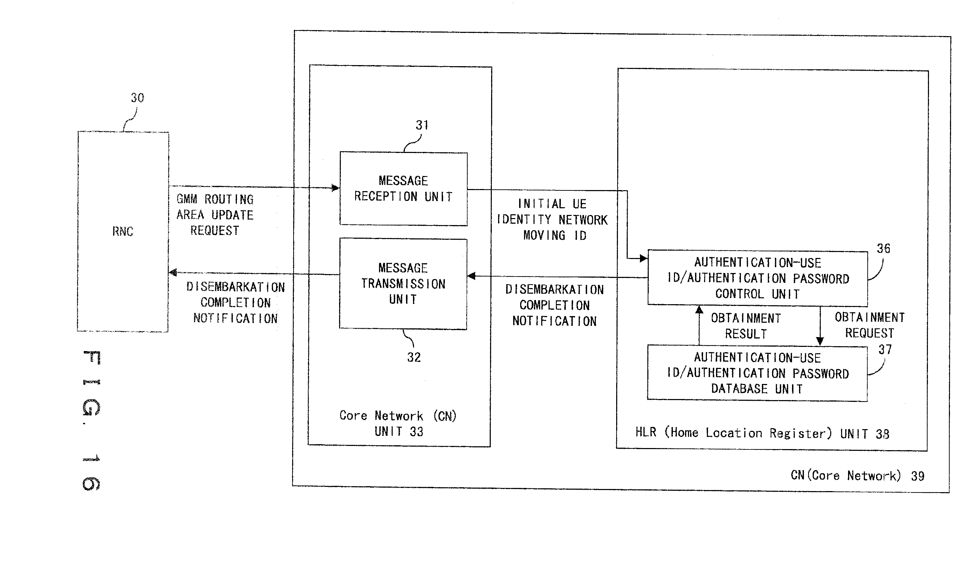

Fig. 16 is a diagram showing an outline of an operation for a CN's changeover request process. Having received a GMM Routing Area Update Request from the RNC 30, the message reception unit 31 transmits the Initial UE identity and Network Moving ID to the authentication-use ID/authentication password control unit 36. The authentication-use ID/authentication password control unit 36 notifies the authentication-use ID/authentication password database unit 37 of a request to change the *"*in use*"* authentication-use ID and authentication password to "not in use". Having received the change result, the authentication-use ID/authentication password control unit 36 transmits a disembarkation completion notification to the message transmission unit 32, which in turn transmits the disembarkation completion notification to the RNC 30.

### <Method for communicating between an in-vehicle AP and a mobile device>

The following describes a method for communicating between an in-vehicle AP and a mobile device.

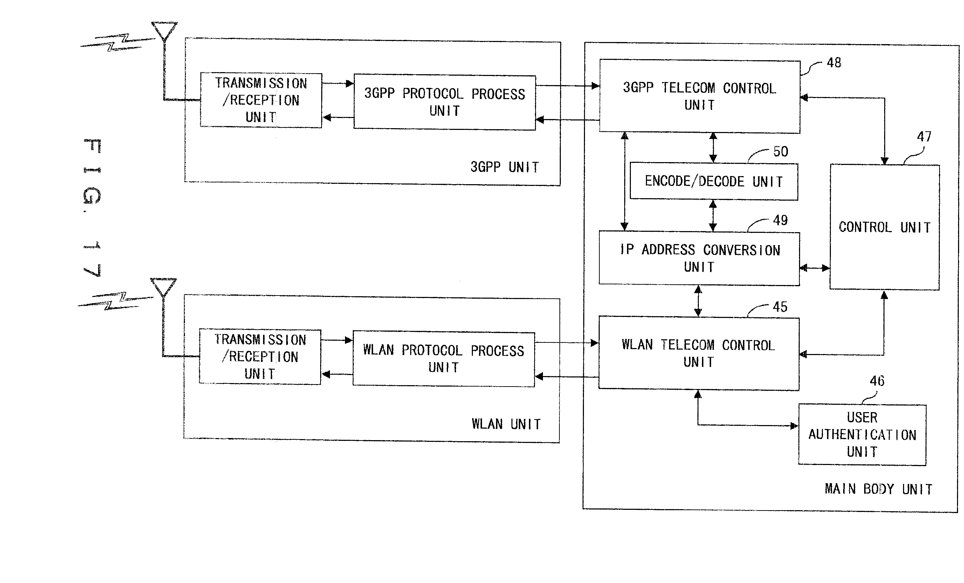

Fig. 17 is a functional block diagram of an in-vehicle AP.

An outline of the function is as follows:
1. A WLAN telecom control unit 45, located within the in-vehicleAP, receives an authentication request from the mobile device, transmits the authentication-use ID and authentication password (which are transmitted from a mobile device to a user authentication unit 46), and carries out an authentication.
2. If the authentication of the mobile device is a success, the authentication is notified by a control unit 47, which then requests that a 3GPP telecom control unit 48 secure a telecom resource for the applicable mobile device.
3. If the 3GPP telecom control unit 48 succeeds in securing the telecom resource, the control unit 47 correlates the IP address assigned to the mobile device with a channel number on the 3GPP's Dedicated Traffic Channel (DTCH).
4. The 3GPP telecom control unit 48 adds the channel number to the header of a data packet from the DTCH, and transmits the resultant to an IP address conversion unit 49 if a packet data is being transmitted, or to an encode/decode unit 50 if voice data is being transmitted.
5. The encode/decode unit 50 converts the data part of an Adaptive Multi-Rate (AMR), which is the 3GPP's voice data, into Voice over Internet Protocol (VoIP) data and transmits the resultant to the IP address conversion unit 49.
6. The IP address conversion unit 49 extracts a channel number from the data transmitted from the 3GPP telecom control unit 48, and converts it into a corresponding IP address. The data is then transmitted to a WLAN telecom control unit 45.
7. If there has been a telecom end request from a mobile device (or if a telecom can no longer be established, due to a radio wave condition from the mobile device), the WLAN telecom control unit 45 (which is in the in-vehicle AP) ends the telecom with the present mobile device.
8. The in-vehicle AP's control unit 47 requests the 3GPP telecom control unit 48 release the mobile device's telecom resource.
9. The control unit 47 erases the association between the IP address, which is assigned to the mobile device, and the 3GPP' s DTCH channel number.

Note that paragraphs 4, 5 and 6 above show a flow of data from the 3GPP to the WLAN; however, a reverse flow of data can be carried out in a similar process.

The transmission/reception unit, 3GPP protocol process unit, and WLAN protocol process unit, are the same as those of Fig. 2; therefore, their descriptions are omitted here.

Also, the encode/decode unit 50 is configured to convert voice data between the AMR and VoIP, which is where encoding and decoding is carried out. The AMR and VoIP cannot be interchanged because a time delay in voice data is limited in the AMR, which is a 3GPP voice protocol, whereas a WLAN' s VoIP allows for random delays.

A detail of the function is as follows:
I. The following is an example of an authentication method for an authentication-use ID, and an authentication password, that is carried out by the user authentication unit within an in-vehicle AP.
   The following describes an Extensible Authentication Protocol (EAP) authentication system employing a common WLAN and a Remote Authentication Dial In User Service (RADIUS) server (EAP-TTLS (Tunneled Transport Layer Security)).

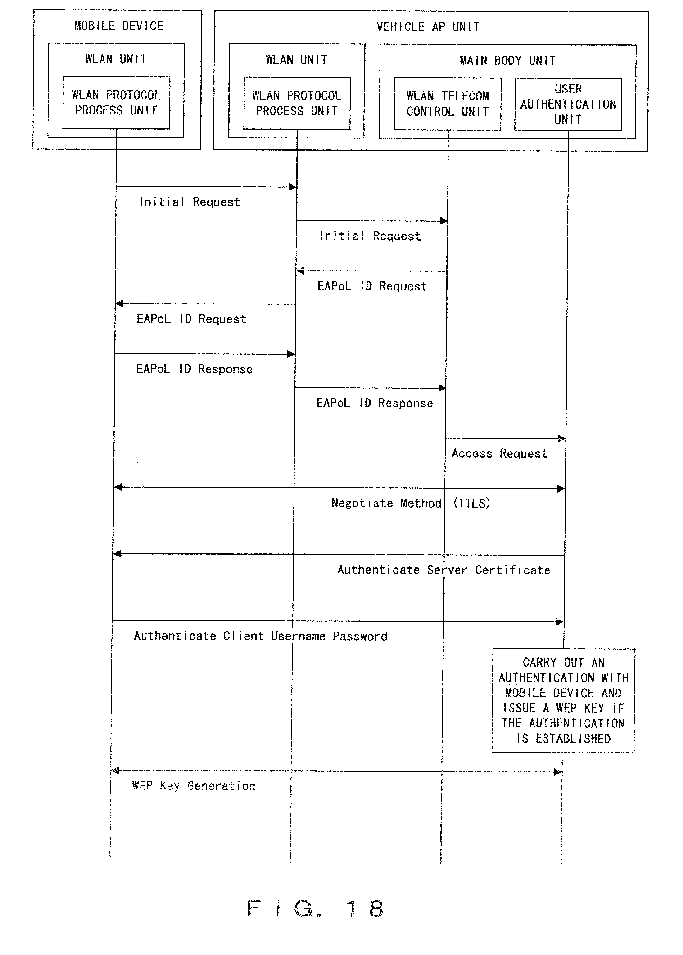

   Fig. 18 is a WLAN authentication sequence between a mobile device and an in-vehicle AP.
   1. The WLAN telecom control unit, located within the in-vehicle AP, receives an Initial Request from the mobile device. (Initial Request)
   2. The WLAN telecom control unit, located within the in-vehicle AP, requests an authentication-use ID from the mobile device. (EAPoL ID Request)
   3. The WLAN telecom control unit, located within the in-vehicle AP, receives an authentication-use ID that is transmitted from a mobile device. (EAPoL ID Response)
   4. The WLAN telecom control unit, located within the in-vehicle AP, transmits an authentication-use ID from a mobile device to a user authentication unit within the in-vehicle AP. (Access Request)
   5. The user authentication unit located within the in-vehicle AP, communicates with a mobile device and determines an authentication method. (Negotiate Method (TTLS))
   6. The user authentication unit, located within the in-vehicle AP, transmits an authentication-use server certificate to a mobile device. (Authenticate Server Certificate)
   7. The mobile device transmits an authentication password to a user authentication unit, which is within the in-vehicle AP. (Authenticate Client Username Password)
   8. The user authentication unit, located within the in-vehicleAP, issues a secret-key cryptographic key (i.e., Wired Equivalent Privacy (WEP) key) to a mobile device. (WEP key Generation)
      In the authentication procedure described above, the "method for an RNC transmitting a changeover request, ID and password to a mobile device" is employed by the method for a mobile device to transmit an authentication-use ID and authentication password.. The authentication-use ID and authentication password are transmitted from the RNC to the mobile device and kept secret ; therefore, a third party cannot intercept any of them.
II. The following shows a method whereby a control unit requests that a 3GPP telecom control unit secure a telecom resource for an applicable mobile device:
   1. The 3GPP telecom control unit within the in-vehicle AP requests the RNC for adding a DTCH.
   2. The channel number of the added DTCH is recorded.
III. The following shows a method whereby a control unit correlates an IP address, assigned to the mobile device, with a 3GPP DTCH channel number.
   1. The control unit, located within the in-vehicle AP, correlates a mobile device's IP address (which is assigned to the mobile device by a WLAN telecom control unit) with a DTCH channel number added in the above paragraph II.
IV. The following shows a method whereby a 3GPP telecom control unit adds a channel number to the header of a DTCH data packet:
   1. In the case of a packet telecom, the channel number of the transmitted and received DTCH is added to the header part of an IP packet.
   2. In the case of voice data, the channel number of the transmitted and received DTCH is added to the header part of a voice packet.
V. The following shows a method whereby an encode/decode unit converts an AMR data part, which is 3GPP voice data, into a VoIP data packet:
   1. Data compressed by an AMR codec is obtained from a 3GPP telecom control unit.
   2. An AMR decoder, located within the encode/decode unit, decodes the data compressed by the AMR codec.
   3. The decoded data is transmitted to an encode/decode unit's VoIP encoder and compressed to a VoIP-use data packet.
   4. The compressed data packet is transmitted to the IP address conversion unit and converted into an IP address for the applicable mobile device.
VI. The following shows the method whereby an encode/decode unit converts a VoIP data packet into an AMR data part, which is voice data of the 3GPP:
   1. obtaining data compressed by a VoIP data packet from an IP address conversion unit.
   2. A VoIP decoder, located within the encode/decode unit, decodes the data compressed by a VoIP codec.
   3. The decoded data is transmitted to the encode/decode unit's AMR encoder and compressed a to AMR-use data.
   4. The compressed data is transmitted to the 3GPP telecom control unit and converted into the 3GPP protocol.

I. The following shows the process for implementing a function for determining the time of embarking onto a vehicle by an RFID tag, using an installation method #1 of an RFID tag writer, as well as using a function of a mobile device when the mobile device outside of a vehicle embarks onto a vehicle. The following description illustrates the operation of a mobile device proceeding from the outside of a vehicle to the inside of the vehicle.

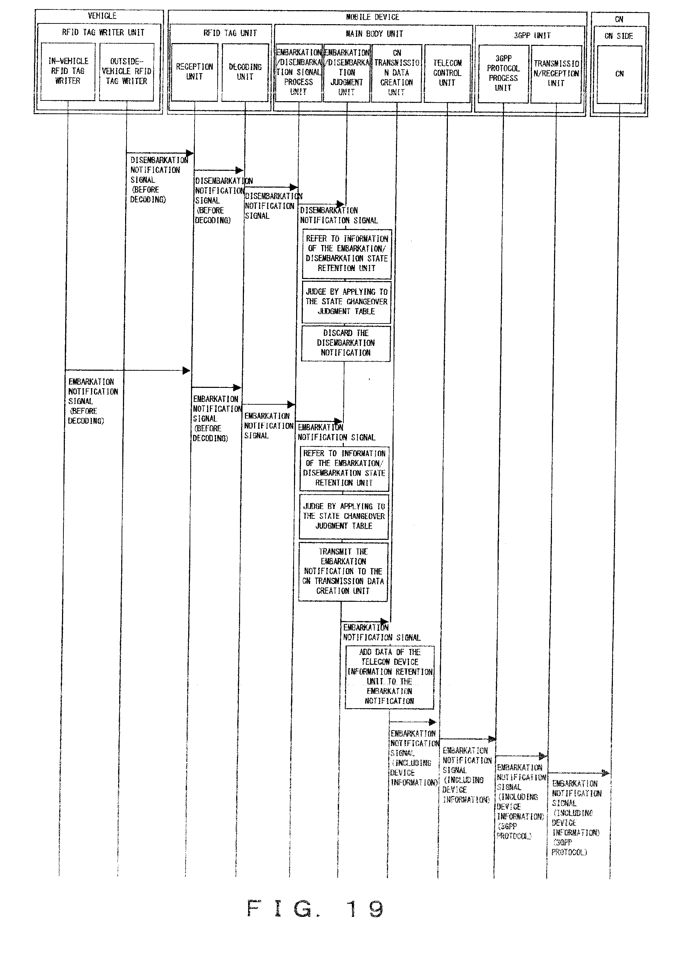

   Fig. 19 is an embarkation notification sequence between the vehicle, mobile device, and CN.
   1. A reception unit, located within the RFID tag of the mobile device, receives a disembarkation notification signal transmitted from an outside-vehicle RFID tag writer.
   2. A decoding unit, located within a RFID tag of a mobile device, decodes the received signal.
   3. An embarkation/disembarkation signal process unit, located within the main body unit of a mobile device, analyzes the decoded signal and judges whether or not a received signal is a disembarkation notification.
   4. An embarkation/disembarkation judgment unit, located within the main body unit of the mobile device, applies the disembarkation notification sent from the embarkation/disembarkation signal process unit, and the state (of disembarkation) sent from the embarkation/disembarkation state retention unit, to a state changeover judgment table. It then judges whether to discard the disembarkation notification.
   5. The reception unit, located within a mobile device's RFID tag, receives an embarkation notification (including a mobile network ID) signal transmitted from an in-vehicle RFID tag writer.
   6. The decoding unit, located within a mobile device's RFID tag, decodes the received signal.
   7. The embarkation/disembarkation signal process unit, located within the main body unit of the mobile device, analyzes the decoded signal and judges whether the received signal is an embarkation notification.
   8. The embarkation/disembarkation judgment unit, located within the main body unit of the mobile device, applies the embarkation notification sent from the embarkation/disembarkation signal process unit, and a state (of disembarkation) sent from the embarkation/disembarkation state retention unit, to a state changeover judgment table. It then judges whether the embarkation notification is a transmission to the CN transmission data creation unit, and transmits it accordingly.
   9. The CN transmission data creation unit, located within the main body unit of the mobile device, adds telecom device information obtained from a telecom device information retention unit to the embarkation notification and mobile network ID (which are received from the embarkation/disembarkation judgment unit) and transmits the resultant to the telecom control unit located within a mobile device's main body unit.
   10. The telecom control unit, located within a mobile device's main body unit, transmits the data transmitted from the CN transmission data creation unit to the 3GPP protocol process unit located within a mobile device's 3GPP unit.
   11. The 3GPP protocol process unit, located within a mobile device's 3GPP unit transmits data from the telecom control unit, located within the main body unit of the mobile device, to the CN by way of the transmission/reception unit within a mobile device's 3GPP unit.
II. The following shows a process for implementing a function for discerning whether a vehicle has been embarked onto by using an RFID tag. When the mobile device exists on the outside of the vehicle that is being embarked on, an installation method 1 for the RFID tag writer, and a mobile device function, is employed. The following description illustrates a mobile device's operation for proceeding from the inside of a vehicle to the outside of the vehicle.

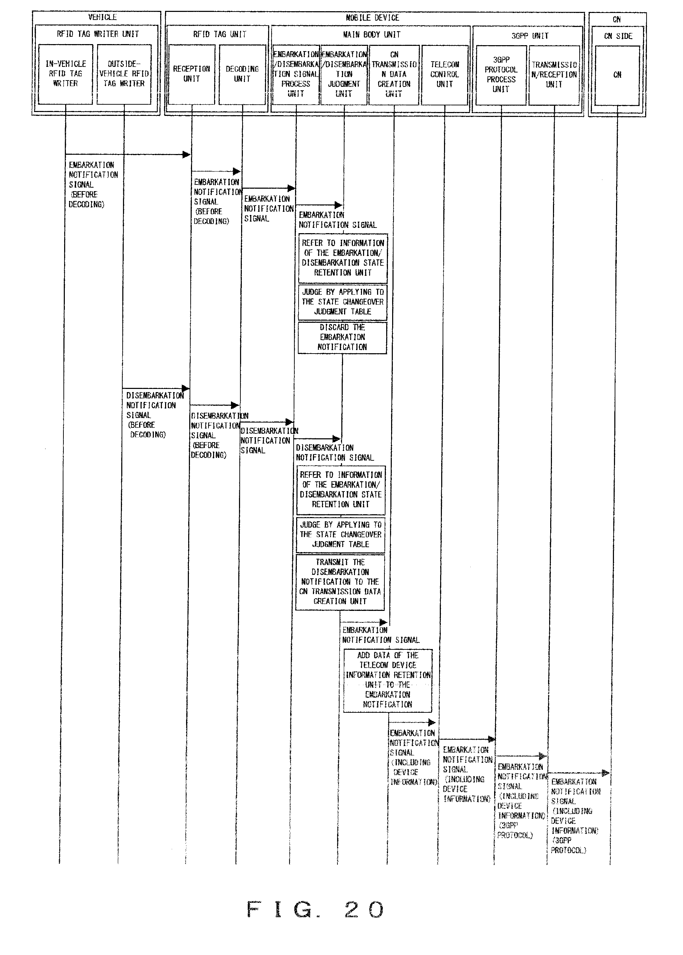

   Fig. 20 is a disembarkation notification sequence between the vehicle, mobile device, and CN.
   1. The reception unit, located within a mobile device's RFID tag, receives an embarkation notification (including a mobile network ID) signal transmitted from an outside-vehicle RFID tag writer.
   2. The decoding unit, located within a mobile device's RFID tag, decodes the received signal.
   3. The embarkation/disembarkation signal process unit, located within the main body unit of the mobile device, analyzes the decoded signal and judges whether the received signal is an embarkation notification.
   4. The embarkation/disembarkation judgment unit, located within the main body unit of the mobile device, applies the embarkation notification sent from the embarkation/disembarkation signal process unit, and a state (of embarkation) sent from an embarkation/disembarkation state retention unit, to a state changeover judgment table. It then judges whether or not to discard the embarkation notification.
   5. The reception unit, located within a mobile device' s RFID tag, receives a disembarkation notification signal transmitted from an in-vehicle RFID tag writer.
   6. The decoding unit, located within a mobile device's RFID tag, decodes the received signal.
   7. The embarkation/disembarkation signal process unit, located within the main body unit of a mobile device, analyzes the decoded, signal and judges whether or not the received signal is a disembarkation notification.
   8. The embarkation/disembarkation judgment unit, located within the main body unit of a mobile device, applies the disembarkation notification, sent from the embarkation/disembarkation signal process unit, and a state (of embarkation (including a mobile network ID)) sent from an embarkation/disembarkation state retention unit, to a state changeover judgment table. It then judges whether the disembarkation notification is a transmission to the CN transmission data creation unit, and transmits it accordingly.
   9. The CN transmission data creation unit, located within the main body unit of a mobile device, adds telecom device in formation obtained from a telecom device information retention unit to the disembarkation notification and mobile network ID, which are received from the embarkation/disembarkation judgment unit, and transmits the resultant to the telecom control unit (which is located within the main body unit of the mobile device.)
   10. The telecom control unit, located within the main body unit of the mobile device, transmits data from the CN transmission data creation unit to the 3GPP protocol process unit (which is located within a mobile device's 3GPP unit.)
   11. The 3GPP protocol process unit, located within the mobile device's 3GPP unit, transmits data from a telecom control unit, located within the main body unit of the mobile device, to the CN byway of a transmission/reception unit (which is located within a mobile device's 3GPP unit.)
III. The following illustrates a sequence of WLAN authentications and the establishment of a telecom between a WLAN and a mobile device' s 3GPP, in-vehicle AP, and RNC; wherein a mobile device's IP address is different from an IP address assigned to a DTCH and the conversion unit is required.

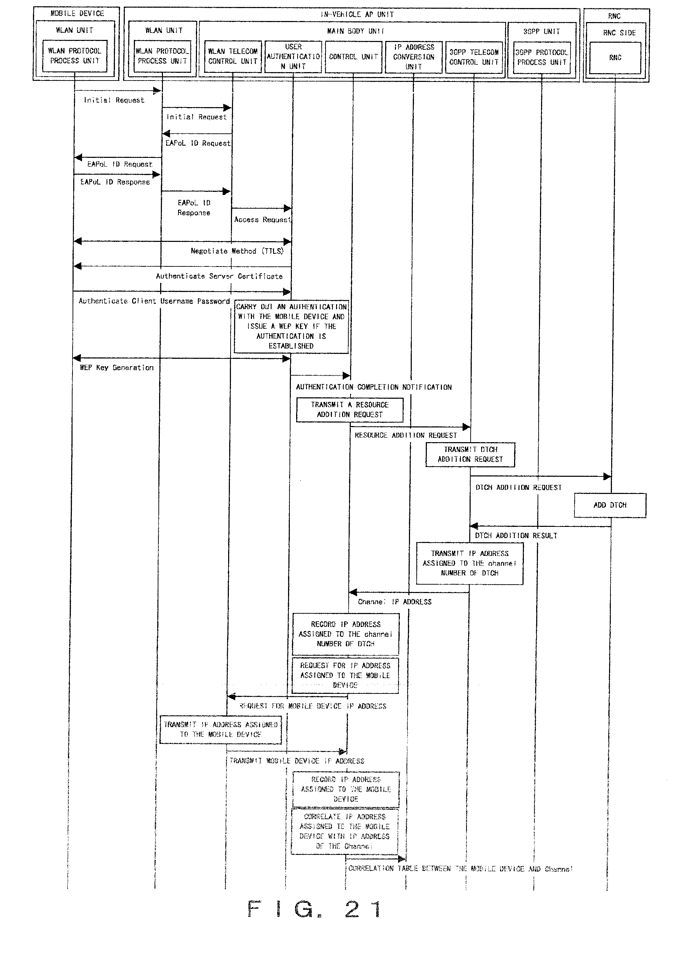

   Fig. 21 is a WLAN authentication sequence between a mobile device, in-vehicle AP, and RNC, as well as a sequence for establishing a telecommunication between a WLAN and a 3GPP.
   1. The WLAN telecom control unit, located within the in-vehicle AP, receives an Initial Request from the mobile device. (Initial Request)
   2. The WLAN telecom control unit, located within the in-vehicle AP, requests an authentication-use ID from a mobile device. (EAPoL ID Request)
   3. The WLAN telecom control unit, located within the in-vehicle AP, receives an authentication-use ID that is transmitted from a mobile device. (EAPOL ID Response)
   4. The WLAN telecom control unit, located within the in-vehicle AP, transmits an authentication-use ID from a mobile device to a user authentication unit (which is located within the in-vehicle AP.) (Access Request)
   5. The user authentication unit, located within the in-vehicle AP, communicates with a mobile device and determines an authentication method. (Negotiate Method (TTLS))
   6. The user authentication unit, located within the in-vehicle AP, transmits an authentication-use server certificate to the mobile device. (Authenticate Server Certificate)
   7. The mobile device transmits an authentication password to a user authentication unit within the in-vehicle AP. (Authenticate Client Username Password)
   8. The user authentication unit, located within the in-vehicle AP, issues a secret-key cryptographic key (Wired Equivalent Privacy (WEP) key) to the mobile device. (WEP key Generation)
   9. The user authentication unit sends an authentication completion notification to the control unit.
   10. The control unit sends a resource addition request to the 3GPP telecom control unit. The 3GPP telecom control unit transmits a DTCH addition request to the RNC.
   11. The RNC adds a DTCH in accordance with the DTCH addition request and sends the addition result to the 3GPP telecom control unit.
   12. The 3GPP telecom control unit sends an IP address, which is assigned to a DTCH's channel number, to the control unit.
   13. The control unit records the IP address assigned to a DTCH's channel number and requests the mobile device's assigned IP address from a WLAN telecom control unit.
   14. The WLAN telecom control unit sends the mobile device's IP address to the control unit.
   15. The control unit records the IP address assigned to a mobile device, correlates it with a channel's IP address, and sends the correlation table to an IP address conversion unit.
IV. The following illustrates a sequence of packet transmissions and receptions between a WLAN and 3GPP, within a mobile device, in-vehicle AP, and RNC where the conversion unit is required, assuming a mobile device's IP address is different from the IP address assigned to a DTCH.

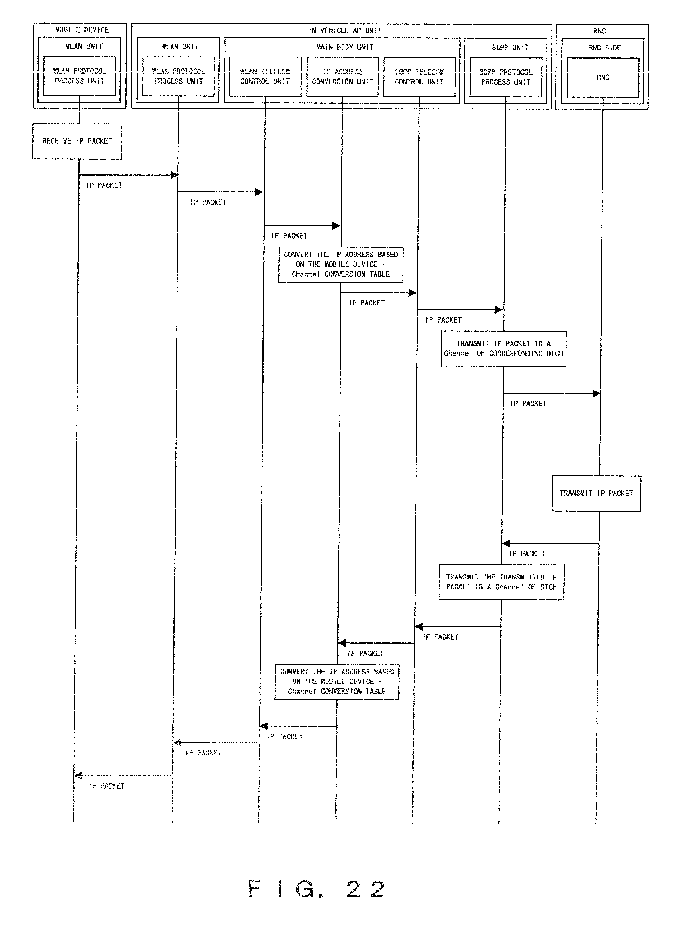

   Fig. 22 is a packet transmission and reception sequence between a WLAN and 3GPP, within a mobile device, in-vehicle AP, and RNC.
   1. The mobile device's WLAN unit transmits an IP packet by using a WLAN protocol process unit. The transmitted IP packet is reported to the main body unit's IP address conversion unit via a WLAN protocol process unit and an in-vehicle AP unit's WLAN telecom control unit.
   2. The IP address conversion unit converts the IP address of the IP packet, which is based on a mobile device channel conversion table, and transmits the IP packet to the 3GPP protocol process unit. The 3GPP protocol process unit transmits the IP packet to a DTCH channel that corresponds to the received IP packet. The IP packet is received at the RNC.
   3. When transmitting the IP packet from a RNC to a mobile device, the IP packet is transmitted from the RNC to an in-vehicle AP's 3GPP protocol process unit and the IP packet that was transmitted to the DTCH channel is then transmitted to the IP address conversion unit.
   4. The IP address conversion unit converts the IP address based on a mobile device channel conversion table, and then transmits an IP packet, whereby the IP address is changed to the mobile device.
V. The following illustrates a sequence of voice transmissions and receptions between a WLAN and a 3GPP, within a mobile device, in-vehicle AP, and RNC, wherein a mobile device's IP address is different from an IP address assigned to a DTCH and the conversion unit is required.

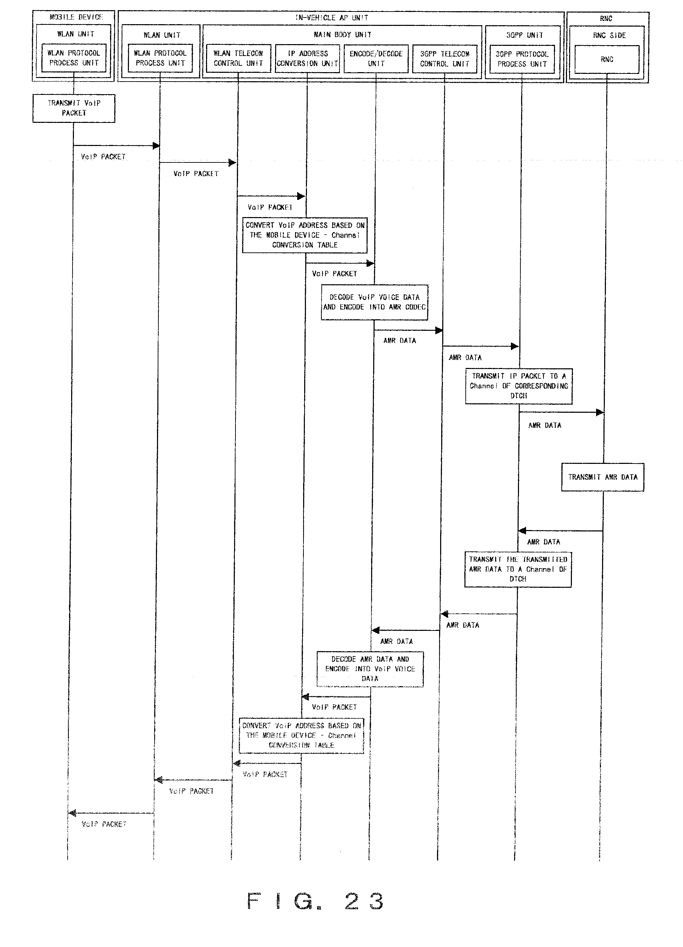

   Fig. 23 is a voice transmission and reception sequence between a WLAN and 3GPP, within a mobile device, in-vehicle AP, and RNC.
   1. When a VoIP packet is transmitted from a mobile device's WLAN protocol process unit, it is received by the in-vehicle AP unit's IP address conversion unit.
   2. The IP address conversion unit converts the VoIP address based on the mobile device - channel conversion table.
   3. The IP packet, which includes the converted IP address, is sent to the encode/decode unit to decode VoIP voice data and encode it into AMR data.
   4. The generated AMR data is sent to a 3GPP protocol process unit, which then sends the AMR data to the RNC by using a DTCH channel.
   5. When sending voice data from a RNC to a mobile device, the AMR data is sent to the 3GPP protocol process unit and an encode/decode unit transmits the AMR data (which has been transmitted to a DTCH channel.)
   6. The encode/decode unit decodes the AMR data, encodes it to VoIP voice data, and sends it to an IP address conversion unit.
   7. The IP address conversion unit converts the VoIP address based on the mobile device - channel conversion table and sends the VoIP packet to a mobile device.
VI. The following illustrates a sequence for authenticating a WLAN and establishing a telecom between a WLAN and 3GPP, within a mobile device, in-vehicle AP, and RNC, wherein a mobile device's IP address and the IP address assigned to a DTCH are regarded as the same, and a conversion unit is not required.

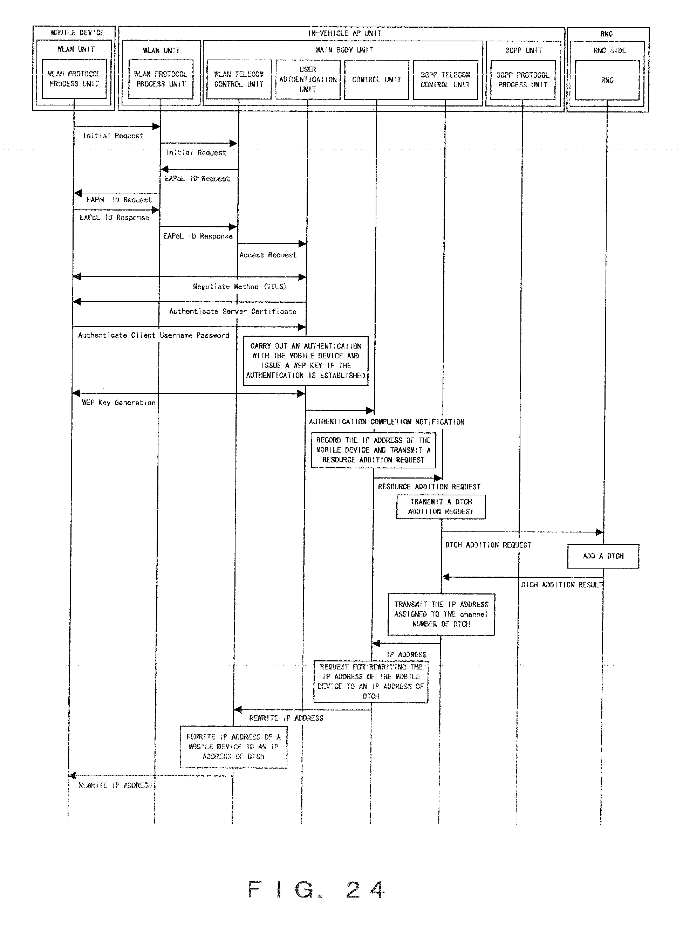

   Fig. 24 is a sequence for authenticating a WLAN and for establishing a telecommunication between the WLAN and 3GPP, within a mobile device, in-vehicle AP, and RNC.
   1. The WLAN telecom control unit, located within the in-vehicle AP, receives an Initial Request from a mobile device. (Initial Request)
   2. The WLAN telecom control unit, located within the in-vehicle AP, requests an authentication-use ID from a mobile device. (EAPoL ID Request)
   3. The WLAN telecom control unit, located within the in-vehicle AP, receives an authentication-use ID transmitted from a mobile device. (EAPoL ID Response)
   4. The WLAN telecom control unit, located within the in-vehicle AP, transmits the authentication-use ID, which was transmitted from the mobile device, to the user authentication unit (which is located within the in-vehicle AP.) (Access Request)
   5. The user authentication unit, located within the in-vehicle AP, communicates with a mobile device and determines an authentication method. (Negotiate Method (TTLS))
   6. The user authentication unit, located within the in-vehicle AP, transmits an authentication-use server certificate to the mobile device. (Authenticate Server Certificate)
   7. The mobile device transmits an authentication password to the user authentication unit, which is located within the in-vehicle AP. (Authenticate Client Username Password)
   8. The user authentication unit, located within the in-vehicle AP, issues a secret-key cryptographic key (Wired Equivalency Privacy (WEP) key) to a mobile device. (WEP key Generation)
   9. The user authentication unit sends, an authentication completion notification to the control unit.
   10. The control unit sends a resource addition request to the 3GFP telecom control unit. The 3GPP telecom control unit transmits a DTCH addition request to the RNC.
   11. The RNC adds a DTCH in accordance with the DTCH addition request and sends the result to the 3GPP telecom control unit.
   12. The 3GPP telecom control unit sends an IP address, which is assigned to a DTCH channel number, to the control unit.
   13. The control unit requests that the WLAN telecom control unit rewrite the mobile device' s IP address to a DTCH IP address.
   14. The WLAN telecom control unit rewrites a mobile device's IP address to a DTCH IP address and sends a request to the mobile device to rewrite the IP address.
VII. The following shows a sequence for transmitting and receiving a packet between the WLAN and 3GPP, within a mobile device, in-vehicle AP, and RNC, when a mobile device's IP address and the IP address assigned to a DTCH are regarded as the same, and a conversion unit is not required.

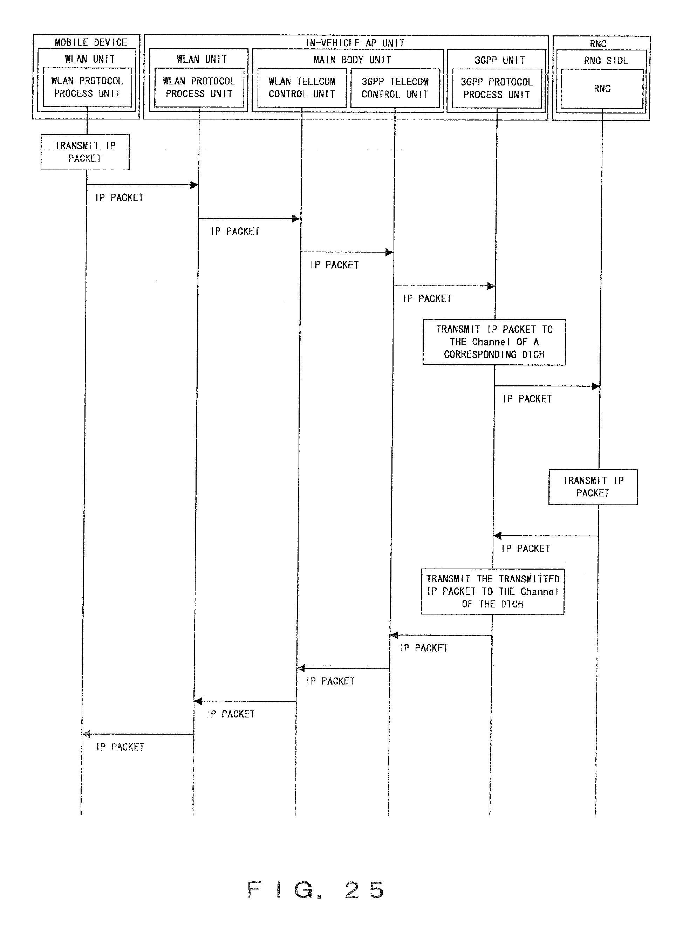

   Fig. 25 is a packet transmission and reception sequence between the WLAN and 3GPP, within a mobile device, in-vehicle AP, and RNC, when an IP address conversion does not exist.
   1. When a mobile device transmits an IP packet, the in-vehicle AP' s 3GPP protocol process unit receives the IP packet and transmits it to the RNC by using a corresponding DTCH channel.
   2. When the IP packet is transmitted from the RNC, the in-vehicle AP' s 3GPP protocol process unit receives the IP packet and transmits it by using a DTCH channel.
VIII. The following illustrates a sequence for transmitting and receiving a voice between the WLAN and 3GPP, within a mobile device, within-vehicle AP, and RNC, when a mobile device' s IP address and the IP address assigned to a DTCH are regarded as the same, and a conversion unit is not required.

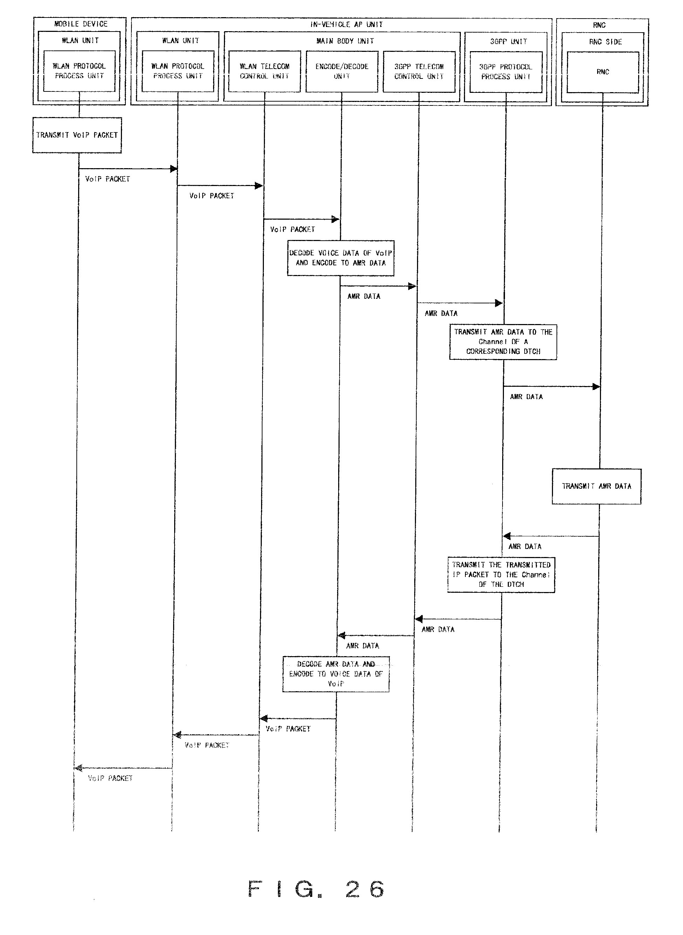

   Fig. 26 is a sequence for transmitting and receiving a voice between a WLAN and 3GPP, within a mobile device, in-vehicle AP, and RNC.
   1. A mobile device's WLAN protocol process unit transmits a VoIP packet.
   2. The VoIP packet is sent to an encode/decode unit, which then decodes VoIP voice data and encodes it to AMR data.
   3. The generated AMR data is sent to a 3GPP protocol process unit, which then transmits the AMR data to the RNC by employing the corresponding DTCH channel.
   4. When the RNC sends voice data to a mobile device, the AMR data is sent to a 3GPP protocol process unit and the AMR data that is transmitted to a DTCH channel is sent to the encode/decode unit.
   5. The encode/decode unit decodes the AMR data, encodes it to VoIP voice data, and sends the VoIP packet to the to the mobile device.
IX. Next is a description of an RFID tag reader/writer installation method and an operation for implementing a function for discerning whether a vehicle is being embarked on, or disembarked from, by using an RFID tag.

The following illustrates an example of data formats for a disembarkation notification, for data transmitted from a mobile network ID's RFID writer, and for a RFID tag reader/writer installation method.

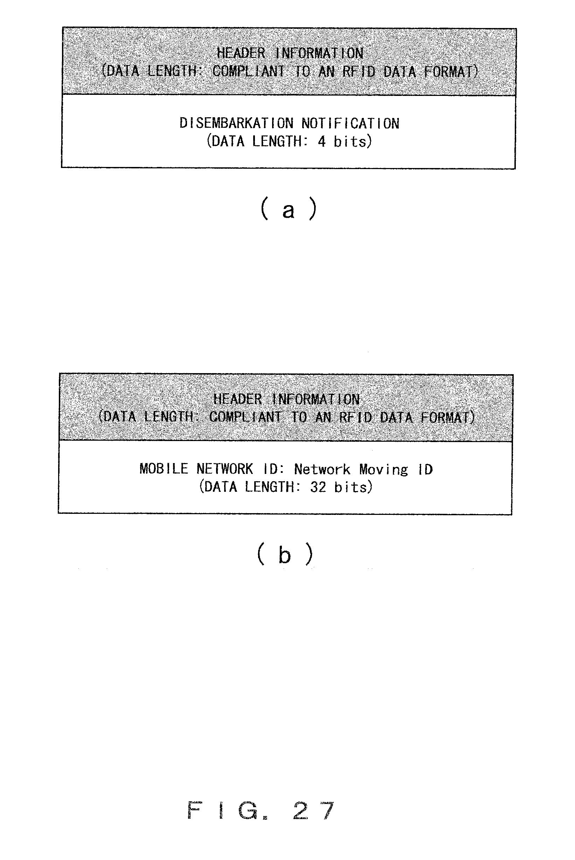

Figs. 27A and 27B are diagrams illustrating a data format for an RFID and a data format for a mobile network ID.
i. Regarding a data format for a disembarkation notification
   Fig. 27A exemplifies a data format for a disembarkation notification.
   Data for a disembarkation notification is composed of header information having a data length that is compliant with a RFID data format. For example, a disembarkation notification may have a data length of 4 bits.
ii. Regarding a data format for a mobile network ID
   Fig. 27B exemplifies a data format for a mobile network ID.

Mobile network ID data is composed of header information having a data length that is compliant with a RFID data format. For example, a Network Moving ID may have a data length of 32 bits.

### <Configuration example of an RFID tag reader/writer installation method>

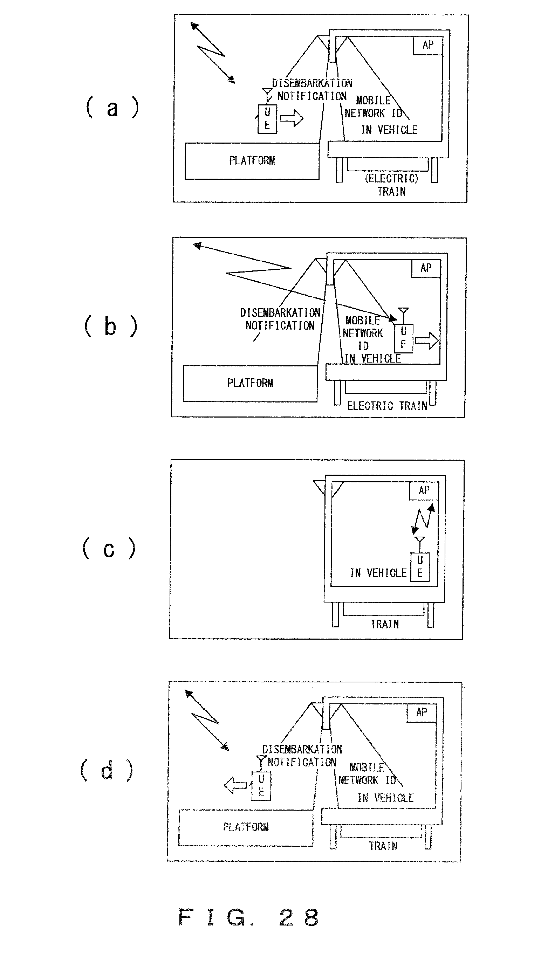

Figs. 28A through 31D are diagrams exemplifying a RFID tag reader/writer installation method.
1. Figs. 28A through 28D refer to a method #1 for equipping RFID tag writers in two places, specifically on the outside, and inside, of a vehicle.
   Both the outside-vehicle RFID tag writer and the inside-vehicle RFID tag writer operate simultaneously. The outside-vehicle RFID tag writer continuously transmits a disembarkation notification and the inside-vehicle RFID tag writer continually transmits an embarkation notification (including a mobile network ID).
   When embarking on a vehicle, a mobile device receives a disembarkation notification from the outside-vehicle RFID tag writer, and then receives a mobile network ID from the inside-vehicle RFID tag writer. Having received the mobile network 10 and the disembarkationnotification, the mobile device judges whether there has been an embarkation onto the vehicle (refer to Fig. 28A).
   The mobile device transmits the obtained mobile network ID to the CN, receives an instruction from the CN to change to the in-vehicle AP, and changes the telecom system from the 3GPP protocol to a WLAN, which is a telecom system for the in-vehicle AP (refer to Fig. 28B).
   After changing over to the in-vehicle AP, the mobile device engages in telecommunications with the WLAN until a disembarkation notification is received from the RFID (refer to Fig. 28C).
   When disembarking from the vehicle, the mobile device receives a mobile network ID from the inside-vehicle RFID tag writer, and then receives a disembarkation notification from the outside-vehicle RFID tag writer. Having received the disembarkation notification and the mobile network ID, the mobile device judges whether the vehicle has been disembarked from, changes over to the 3GPP, and returns to a usual mobile telecom (refer to Fig. 28D).

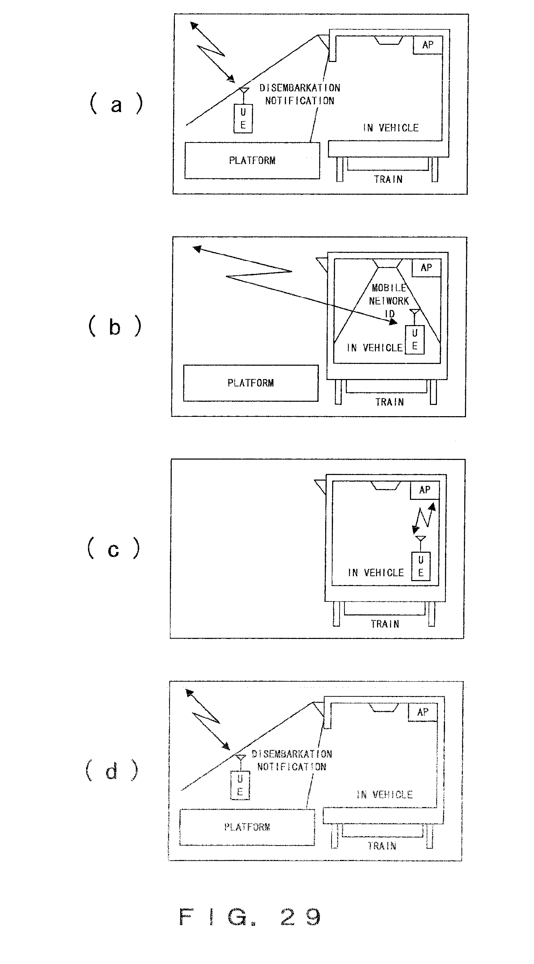

2. Figs. 29A through 29D refer to a method #2 for equipping RFID tag writers in two places, specifically on the outside, and inside, of a vehicle. The outside-vehicle RFID tag writer continuously transmits a disembarkation notification when a door is being opened, and the inside-vehicle RFID tag writer transmits an embarkation notification (including a mobile network ID) for a certain length of time when a door is being closed.
   A mobile device has obtained a disembarkation notification from the RFID and has discarded it because it has not received an embarkation notification (refer to Fig. 29A).
   After closing the door, the inside-vehicle RFID tag writer transmits a mobile network ID. The mobile device obtains the mobile network ID by way of the RFID, transmits it to the CN, receives an instruction from the CN for changing to the in-vehicle AP, and accordingly changes to the in-vehicle AP (refer to Fig. 29B).
   After changing to the in-vehicle AP, the mobile device continues telecoms until a disembarkation notification is received from the RFID (refer to Fig. 29C).
   After closing the door, the outside-vehicle RFID tag writer transmits a disembarkation notification. The mobile device obtains a disembarkation notification from the RFID, changes to the 3GPP, and returns to a usual mobile telecom (refer to Fig. 29D).

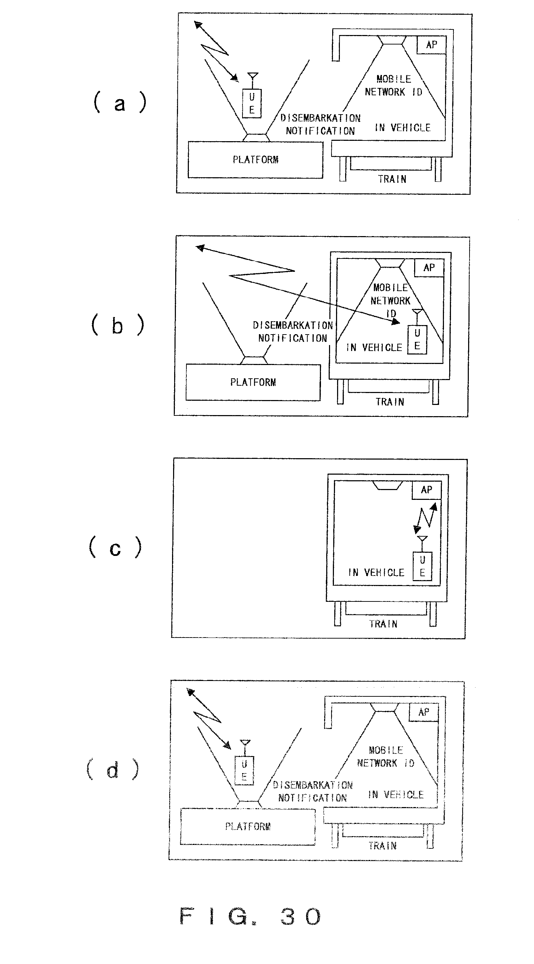

3. Figs. 30A through 30D illustrate a method #1 for equipping RFID tag writers on the outside (e.g., on a station platform), and inside, of a vehicle.
   The on-platform RFID tag writer and inside-vehicle RFID tag writer operate simultaneously. The on-platform RFID tag writer continuously transmits a disembarkation notification and the inside-vehicle RFID tag writer continuously transmits an embarkation notification (including a mobile network ID).
   When embarking on a vehicle, a mobile device receives a disembarkation notification from the RFID tag writer, which is installed on the platform (i.e., on the outside of a vehicle). The mobile device then receives a mobile network ID from the inside-vehicle RFID tag writer. Having received the disembarkation notification followed by the mobile network ID, the mobile device determines that the vehicle has been embarked on (refer to Fig. 30A). According to Figs. 30A through 30D, the outside-vehicle RFID tag writer is installed on the platform, whereas Figs. 28A through 29D include the outside-vehicle RFID tag writer installed in the vehicle.
   The mobile device transmits the obtained mobile network ID to the CN, receives an instruction from the CN to change access points to the in-vehicle AP and accordingly changes access points (refer to Fig. 30B).
   After changing to the in-vehicle AP, the mobile device continues the telecom until a disembarkation notification is received from the RFID (refer to Fig. 30C).
   When disembarking from the vehicle, the mobile device receives a mobile network ID from the inside-vehicle RFID tag writer, and then receives a disembarkation notification from an outside-vehicle RFID tag writer. Having received the mobile network ID followed by a disembarkation notification, the mobile device determines that the vehicle has been disembarked from, changes to the 3GPP, and returns to a usual mobile telecom (refer to Fig. 30D).

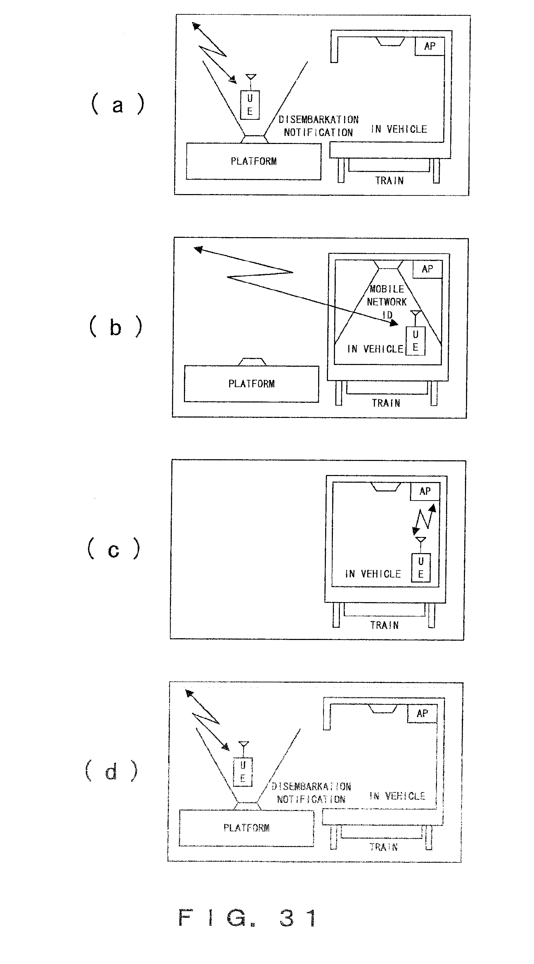

4. Figs. 31A through 31 D illustrate a method #2 for equipping RFID tag writers on the outside (e.g., on a station platform), and inside, of a vehicle.

The on-platform RFID tag writer continuously transmits a disembarkation notification to the mobile device when a door is being opened, and the inside-vehicle RFID tag writer transmits an embarkation notification (including a mobile network ID) to the mobile device for a certain length of time when the door is being closed.

The mobile device obtains a disembarkation notification from the RFID and discards it because an embarkation notification has not been received (refer to Fig. 31A).

After closing the vehicle door, the inside-vehicle RFID tag writer transmits a mobile network ID. The mobile device obtains the mobile network ID via the RFID, transmits the mobile network ID to the CN, receives an instruction from the CN to change the access point to an in-vehicle AP, and accordingly changes the access point (refer to Fig. 31B).

After changing over to an in-vehicle AP, the mobile device continues telecoms until a disembarkation notification has been received from the RFID (refer to Fig. 31C).

After opening the vehicle door, the outside-vehicle RFID tag writer transmits a disembarkation notification. The mobile device obtains the disembarkation notification via a RFID, changes to the 3GPP, and returns to a usual mobile telecom ((refer to Fig. 31D).

## Claims

1. A telecommunication system for carrying out a wireless telecommunication with means for transporting a passenger and/or a cargo that allows a wireless telecommunication apparatus to embark and disembark, comprising:
an embarkation/disembarkation notification means for notifying a wireless telecommunication means that is carrying out the wireless telecommunication as to whether the wireless telecommunication means is on-board or off-board;
an intra-transportation means access point means, which is equipped in a means for transporting the passenger and/or cargo, which functions as an access point dedicated to the wireless telecommunication means within the means for transporting the passenger and cargo, andwhichcentrallymanages accesses of the wireless telecommunication means to a telecommunication system; and
the wireless telecommunication means for carrying out a telecommunication by accessing a means constituting a base for the telecommunication system if the wireless telecommunication means is off-board, and by accessing the infra-transportation means access point means if the wireless telecommunication means is on-board.

2. The telecommunication system according to claim 1, wherein
the wireless telecommunication means comprises a dedicated system for accessing the means constituting the base and comprises a means for accessing the infra-transportation means access point means.

3. The telecommunication system according to claim 2, wherein
the dedicated system for accessing the means constituting the base includes a first wireless telecommunication network on the outside of the means for transporting a passenger and/or a cargo, and includes a second wireless telecommunication network on the inside of the means for transporting a passenger and/or a cargo.

4. The telecommunication system according to claim 2, wherein
the dedicated system for accessing the intra-transportation means access point means is a wireless LAN system or a Bluetooth system.

5. The telecommunication system according to claim 1, wherein
the embarkation/disembarkation notification means is a telecommunication means using a wireless integrated circuit (IC) tag.

6. The telecommunication system according to claim 1, wherein
the embarkation/disembarkation notification means notifies the wireless telecommunication means of information including that the wireless telecommunication means is off-board when it is off-board the means for transporting a passenger and/or a cargo, and notifies the wireless telecommunication means of an identifier of a wireless network within the means for transporting a passenger and/or a cargo managed by the intra-transportation means access point means of the means for transporting the passenger and/or cargo if the wireless telecommunication means is on-board the means for transporting a passenger and/or a cargo.

7. The telecommunication system according to claim 6, wherein
the wireless telecommunication means judges that it is on-board the means for transporting a passenger and/or a cargo if information notified from the embarkation/disembarkation notification means changes from a notification of being off-board to the identifier of the wireless network within the means for transporting a passenger and/or a cargo, and that the wireless telecomunication means is off-board the means for transporting a passenger and/or a cargo if information changes from the identifier of the wireless network within the means for transporting a passenger and/or a cargo to the notification of being off-board.

8. The telecommunication system according to claim 1, wherein
the intra-transportation means access point means further comprises a conversion means for converting voice data obtained from the wireless telecommunication means between a telecommunication protocol within the means for transporting a passenger and/or a cargo and a protocol of the telecommunication system.

9. The telecommunication system according to claim1, wherein
the means for transporting a passenger and/or a cargo is either a bus, a train, other automobile, a fuselage of an airplane or a body of a vessel.

10. A wireless telecommunication unit, comprising:
at least two telecommunication means using different telecommunication systems;
an embarkation/disembarkation information reception means for receiving information on whether the wireless telecommunication unit is on-board a means for transporting a passenger and/or a cargo or off-board the means for transporting a passenger and/or a cargo; and
a changeover means for changing over telecommunication means to be used on the basis of whether or not the wireless telecommunication units are on-board the means for transporting a passenger and/or a cargo.

11. The wireless telecommunication unit according to claim 10, wherein
the embarkation/disembarkation information reception means receives a notification to the effect that the wireless telecommunication unit is off-board, or an identifier of a network to which the wireless telecommunication unit is to belong.

12. The wireless telecommunication unit according to claim 10, wherein
the embarkation/disembarkation information reception means is a telecommunication means using a wireless integrated circuit (IC) tag.

13. The wireless telecommunication unit according to claim 10, wherein
the at least two telecommunication means includes a means using a protocol for mobile telecommunication and a means using a wireless LAN or Bluetooth.

14. An intra-transportation means access point equipped in a means for transporting a passenger and/or a cargo, comprising:
an access means for receiving accesses of all wireless telecommunication units on-board a means for transporting a passenger and/or a cargo and lumping together all accesses to an external network.

15. The in-vehicle access point according to claim 14, wherein
the access means uses a wireless LAN or a Bluetooth system for a telecommunication with the wireless telecommunication unit.

16. The in-vehicle access point according to claim 14, wherein
the access means uses a mobile telecommunication, system for an access to an external network.

17. An information notification apparatus, comprising:
an disembarkation information notification means, being equipped within a means for transporting a passenger and/or a cargo, for notifying a wireless telecommunication means of information to the effect that the wireless telecommunication means is in a state of being off-board the means for transporting a passenger and/or a cargo; and
an embarkation information notification means, being equipped externally to the means for transporting a passenger and/or a cargo, for notifying the wireless telecommunication means of information to the effect the wireless telecommunication means is in a state of being on-board the means for transporting a passenger and/or a cargo.

18. An information notification apparatus, comprising:
a disembarkation information notification means, being equipped within a means for transporting a passenger and/or a cargo, for notifying a wireless telecommunication means of information to the effect that the wireless telecommunication means is in a state of being off-board the means for transporting a passenger and/or a cargo; and
an embarkation information notification means, being equipped in a place where the means for transporting a passenger and/or a cargo stops, for notifying the wireless telecommunication means of information to the effect that the wireless telecommunication means is in a state of being on-board the means for transporting a passenger and/or a cargo.

19. The information notification apparatus according to claim 17 or 18, wherein
the disembarkation information notification means and the embarkation information notification means continuously transmit signals respectively.

20. The information notification apparatus according to claim 17 or 18, wherein
the disembarkation information notification means and the embarkation information notification means transmit signals respectively for a certain period of time after an entrance of the means for transporting a passenger and/or a cargo opens and closes.
